Europäisches Patentamt

European Patent Office

Office européen des brevets

(19)

(11) **EP 1 161 516 B1**

(12) **FASCICULE DE BREVET EUROPEEN**

(45) Date de publication et mention
de la délivrance du brevet:
**24.08.2005 Bulletin 2005/34**

(21) Numéro de dépôt: **00910901.8**

(22) Date de dépôt: **03.03.2000**

(51) Int Cl.$^7$: **C11D 3/37**, C08G 69/40,
C08G 69/48

(86) Numéro de dépôt international:
**PCT/FR2000/000537**

(87) Numéro de publication internationale:
**WO 2000/053711 (14.09.2000 Gazette 2000/37)**

(54) **COPOLYMERE SULFONE ET PROCEDE POUR NETTOYER LES SURFACES ET/OU APPORTER A CELLES-CI DES PROPRIETES DE RESISTANCE AUX TACHES ET/OU FACILITER L'ENLEVEMENT DES TACHES ET DE LA SALISSURE**

SULFONIERTES COPOLYMER UND VERFAHREN ZUR REINIGUNG VON OBERFLÄCHEN UND/ODER ZUR HERSTELLUNG VON FLECKEN ABWEISENDEN EIGENSCHAFTEN DIESER OBERFLÄCHEN UND/ODER ZUR ENTFERNUNG VON FLECKEN ODER VERSCHMUTZUNGEN

SULPHONATED COPOLYMER AND METHOD FOR CLEANING SURFACES AND/OR PROVIDING SAME WITH STAIN RESISTANT PROPERTIES AND/OR FOR FACILITATING STAIN AND SOIL RELEASE

(84) Etats contractants désignés:
**AT BE CH CY DE DK ES FI FR GB GR IE IT LI LU MC NL PT SE**

(30) Priorité: **09.03.1999 US 123418 P**

(43) Date de publication de la demande:
**12.12.2001 Bulletin 2001/50**

(73) Titulaire: **RHODIA CHIMIE**
**92512 Boulogne-Billancourt Cedex (FR)**

(72) Inventeurs:
• **FIRKINS, Simon**
**F-69007 Lyon (FR)**
• **PERIER, Marie-Eve**
**F-69009 Lyon (FR)**

• **ROCHAT, Sandrine**
**F-69100 Villeurbanne (FR)**
• **VOVELLE, Louis**
**69004 Lyon (FR)**
• **GABRIEL, Gladys, Saliba**
**Alamo, CA 94507 (US)**

(74) Mandataire: **Fabre, Madeleine-France et al**
**Rhodia Services,**
**Direction de la Propriété Industrielle,**
**40, rue de la Haie-Coq**
**93306 Aubervilliers Cedex (FR)**

(56) Documents cités:
EP-A- 0 759 459          WO-A-92/02570
FR-A- 2 192 167          FR-A- 2 685 001
US-A- 3 734 874

EP 1 161 516 B1

**Description**

La présente invention a pour objet un nouveau copolymère sulfoné comprenant des motifs polyéthers et polyamides, son procédé de préparation et son utilisation comme agent détergent des surfaces dures ou textiles, notamment en polymère synthétique, tout particulièrement des surfaces textiles en polyamide, et/ou comme agent susceptible d'apporter auxdites surfaces des propriétés de résistance aux taches (stain resistance) et/ou permettant de faciliter l'enlèvement des taches et de la salissure (soil release) desdites surfaces. Elle a également pour objet un procédé mettant en oeuvre ledit copolymère sulfoné, pour nettoyer et/ou traiter lesdites surfaces afin d'apporter à celles-ci des propriétés de résistance aux taches (stain resistance) et/ou permettant de faciliter l'enlèvement des taches et de la salissure (soil release). Elle a en outre pour objet des compositions détergentes comprenant ledit copolymère.

Il a été proposé dans la demande de brevet français FR-A-2 192 167, d'utiliser dans les compositions détergentes pour le lavage des étoffes en polyamide, des copolymères obtenus par condensation (a) d'un acide dicarboxylique aliphatique, (b) d'un composé hydroxypolyoxyalkylénique et (c) d'un composé choisi parmi les aminoacides ou lactames, les diamines ou leurs sels avec l'acide dicarboxylique (a), en combinaison avec un agent détergent choisi parmi les alkylphénois éthoxylés, les alcools primaires ou secondaires alkoxylés, les monoéthanolamides alkoxylés.

La demande de brevet WO92/02570 décrit des articles teints (fibres, tapis) en polyamide, résistants aux taches acides, ledit polyamide étant un polyhexaméthylène adipamide, un poly-ε-caprolactame ou un copolymère hexaméthylène diamine / acide adipique / -ε-caprolactame, contenant de 1 à 4 % en poids de groupes carboxyliques aromatiques sulfonés (par exemple 5-isophtalique acide) et présentant de 20 à 40 milliéquivalents terminaisons amine pour $10^6$ g, ledit polyamide étant teint à l'aide d'une teinture acide.

La demande de brevet français FR-A-2 722 804 décrit des copolyamides hydrosolubles et/ou hydrodispersables de masse moléculaire en nombre de 2000 à 30000, comprenant des motifs dicarbonyle aromatique et/ou aliphatique, des motifs sulfoaryldicarbonyle et des motifs polyoxyalkylène-diamine, seuls ou avec des motifs diamine aliphatique, et leur utilisation pour encoller ("size") les fils synthétiques en polyamide ou les fibres synthétiques en polyamide éventuellement mélangées avec des fibres naturelles, artificielles ou synthétiques autres.

Un premier objet de l'invention consiste en un copolymère (C) hydrosoluble ou hydrodispersable comprenant

- au moins une unité polyoxyalkylène (POA) comprenant de 2 à 200, de préférence de 5 à 150 motifs oxyalkylène semblables ou différents, dont le reste alkylène linéaire ou ramifié contient de 2 à 12, de préférence de 2 à 6 atomes de carbone, tout particulièrement 2 ou 3 atomes de carbone
- et au moins une unité polyamide sulfonée (PAS) ledit copolymère (C) étant caractérisé en ce que

  - ladite unité polyamide sulfonée (PAS) comprend,

    (i) des motifs polyfonctionnels non sulfonés (mNS) semblables ou différents de formule (mNS$^1$) et/ou (mNS$^2$)

$$-C(O)-A-C(O)-N(R)-D-N(R)-\qquad (mNS^1) \text{ (dicarbonyle/diimino)}$$

et/ou

$$-C(O)-K-N(R)-\qquad (mNS^2) \text{ ("lactame")}$$

et/ou

$$-C(O)-K-N(R)-C(O)-A-C(O)-\qquad (mNS^3) \text{ ("lactame"/dicarbonyle)}$$

et/ou

$$-N(R)-D-N(R)-C(O)-K-N(R)-\qquad (mNS^4) \text{ (diimino/"lactame")}$$

formules dans lesquelles

. A représente un groupe hydrocarboné aliphatique, cycloaliphatique ou aromatique

- D représente un groupe hydrocarboné aliphatique, cycloaliphatique ou aromatique éventuellement interrompu par un ou plusieurs hétéroatomes d'oxygène ou d'azote tertiaire
- K représente un groupe aliphatique, cycloaliphatique ou aromatique
- les symboles R sont identiques ou différents et représentent un atome d'hydrogène ou un groupe alkyle en $C_1$-$C_4$

(ii) des motifs polyfonctionnels sulfonés (mS) semblables ou différents de formule

$$-V-Q(L-SO_3M)_n-W-$$

où

- les symboles V et W, identiques ou différents, représentent un groupe
- carbonyle -C(O)-
- oxy -O-
- imino -NH-
- ou (R)imino -N(R)- où R représente un groupe alkyle en $C_1$-$C_4$
- le symbole Q représente un groupe hydrocarboné aromatique, aliphatique ou cycloaliphatique
- L est un lien valentiel ou un groupe alkylène, alcoxyalkylène, oxyalkylène, arylène, alkylarylène, alcoxyarylène
- M représente un atome d'hydrogène ou un cation alcalin
- n est supérieur ou égal à 1

(iii) et des groupes liants (glPAS) des motifs de ladite unité Polyamide sulfonée (PAS)
-C(O)-O- et/ou -O-C(O)- et/ou -C(O)-N(R)- et/ou -N(R)-C(O)- où R, semblable ou différent, représente un atome d'hydrogène ou un groupe alkyle en $C_1$-$C_4$

\* le taux de fonctions $SO_3M$, exprimé en masse de fonction $SO_3^-$, dans ladite ou lesdites unités (PAS) est tel qu'il représente au moins 0,1% , de préférence au moins 0,2%, tout particulièrement au moins 0,4% , notamment de 0,4 à 15% de la masse totale de copolymère (C)
\* le rapport masse de l'ensemble des unités (POA) / masse de l'ensemble des unités (PAS) est de 95/5 à 30/70, de préférence de 90/10 à 40/60, tout particulièrement de 85/15 à 50/50
\* le nombre de fonctions amino -$NH_2$ présentes dans ledit copolymère (C) est d'au plus 80 milliéquivalents par kilogramme de copolymère (C)
\* le nombre de fonctions carboxy -COOH présents dans ledit copolymère (C) est d'au moins d'au moins 80 milliéquivalents, de préférence d'au moins 100 milliéquivalents par kilogramme de copolymère (C).

Le copolymère (C) peut présenter une masse moléculaire en nombre inférieure ou égale à 100 000, de préférence inférieure ou égale à 70 000, tout particulièrement de 5000 à 60 000, mesurée à 100°C par chromatographie d'exclusion de gel (SEC) en solution dans le diméthylacétamide (DMAC) additionné de $10^{-2}$ mole de LiBr ; cette masse est mesurée en équivalent polystyrène.

Ledit copolymère (C) peut en outre comprendre des fonctions monovalentes autres que -COOH et -$NH_2$. On peut citer à titre d'exemples des fonctions hydroxy, alcool, (R)amino, urée, imides, esters, alkyle, aryle, ammonium quaternaire.

Lesdits copolymères (C) peuvent être de type quelconque, linéaire, ramifié, réticulé ...
D'une manière préférentielle, ledit copolymère est un polymère linéaire séquencé ; le rapport nombre de motifs (POA) / nombre de motifs (PAS) est de 1/2 à 2/1.
Les fonctions monovalentes -$NH_2$ éventuels et -COOH se trouvent généralement en extrémités des chaînes de copolymère (C).

Lesdits copolymères peuvent en outre comprendre dans leur(s) unités(s) polyamide(s) (PAS) des motifs polyfonctionnels autres comme :

\* des motifs dicarbonyles non sulfonés de formule -C(O)-A-C(O)- , où A représente un groupe hydrocarboné aliphatique, cycloaliphatique ou aromatique, semblables ou non au sous-motif dicarbonyle du motif (mNS[1]) ou (mNS[3]), non liés à un sous-motif diimino-N(R)-D-N(R)- ou à un sous-motif "lactame"-C(O)-K-N(R)-
\* des motifs polyfonctionnels non sulfonés de formule (i)

(i) -X-E-Y-

où

. les symboles X et Y, identiques ou différents, représentent un groupe

. oxy -O-
. imino -NH-
. ou (R)imino -N(R)- où R représente un groupe alkyle en $C_1$-$C_4$

. le symbole E représente un groupe hydrocarboné aliphatique, cycloaliphatique ou aromatique, polyvalent, éventuellement interrompu par un ou plusieurs hétéroatome(s) d'oxygène ou d'azote tertiaire, ledit groupe polyvalent étant lié à au moins un groupe X et à au moins un groupe Y,

ou

(ii) -C(O)-E'-C(O)-

où
. le symbole E' représente un groupe hydrocarboné aliphatique, cycloaliphatique ou aromatique substitué par au moins une fonction hydroxy ou carboxy

Parmi les motifs aolyfonctionnels non sulfonés (mNS[1]) (dicarbonyle/diimino), on peut mentionner ceux dont

* le sous-motif dicarbonyle est un motif aliphatique ou cycloaliphatique dont le reste aliphatique ou cycloaliphatique contient de 2 à 10 atomes de carbone, comme les motifs adipoyle, glutaroyie, succinoyle, triméthyladipoyle, piméloyle, azeloyle, sebaçoyle, suberoyle, itaconoyle, maléoyle, fumaroyle, cydopentanes dicarbonyle, cyclohexanes dicarbonyle, oxy-2 méthylsuccinoyle, oxyméthylglutaroyle, oxyglutaroyle
* le sous motif dicarbonyle est un motif aromatique, comme les motifs téréphtaloyle, isophtaloyie, orthophtaloyle, naphtalènes dicarbonyle, anthracènes dicarbonyle, biphényl dicarbonyle, oxyisophtaliques dicarbonyle, oxy-4 phtalique dicarbonyle
* le sous-motif diimino est un motif aliphatique dont le reste aliphatique est un groupe alkylène linéaire, ramifié ou cyclique contenant de 2 à 50, de préférence de 2 à 20 atomes de carbone et peut être interrompu par un ou plusieurs hétéroatomes d'oxygène ou azote tertiaire, comme les motifs éthylènedlimino, tétraméthylènediimino, hexaméthylènediimino, méthylpentaméthylènediimino, 3-oxa-pentaméthylènediimino, 3,6-dioxa-octaméthylène-1,8-diimino
* le sous-motif diimino est un motif aromatique dans lesquel le reste aromatique est un radical phénylène ou un radical bivalent constitué d'une combinaison de plusieurs noyaux benzéniques éventuellement substitués, ortho- ou péri-condensés ou liés entre eux par des groupes inertes, tels que lien valentief simple, radical alkylène, groupe oxy, groupe oxo, groupe sulfonyl, comme le motif paraphénylènediimino, le diphénylméthanediimino dont les noyaux phényles sont éventuellement substitués par un radical alkyle en $C_2$-$C_3$.

Parmi les motifs polyfonctionnels non sulfonés (mNS[2]) ("lactame"), on peut mentionner les motifs aliphatiques ou aromatiques, dont le reste aliphatique ou aromatique contient de 2 à 20 atomes de carbone, comme les motifs 6-iminocaproyle, 11-iminoundécanoyle, 12-iminododécanoyle , 3-imino-2-diméthylpropionyle, 4-(β-iminoéthyl)benzoyle.

Parmi les motifs polyfonctionnels non sulfonés (mNS[3]) ("lactame"/dicarbonyle), on peut mentionner ceux dont

* le sous-motif "lactame" est un motif aliphatique ou aromatique dont le reste aliphatique ou aromatique contient de 2 à 20 atomes de carbone, comme les motifs 6-iminocaproyle, 11-iminoundécanoyle, 12-iminododécanoyle , 3-imino-2-diméthylpropionyle, 4-(β-iminoéthyl)benzoyle
* le sous-motif dicarbonyle est un motif aliphatique ou cycloaliphatique dont le reste aliphatique ou cycloaliphatique contient de 2 à 10 atomes de carbone, comme les motifs adipoyle, glutaroyle, succinoyle, triméthyladipoyle, piméloyle, azeloyle, sebaçoyle, suberoyle, itaconoyle, maléoyle, fumaroyle, cyclopentanes dicarbonyle, cyclohexanes dicarbonyle, oxy-2 méthylsuccinoyle, oxyméthylgtutaroyle, oxyglutaroyle
* le sous motif dicarbonyle est un motif aromatique, comme les motifs téréphtaloyle, isophtaloyle, orthophtaloyle, naphtalènes dicarbonyle, anthracènes dicarbonyle, biphényl dicarbonyle, oxyisophtaliques dicarbonyle, oxy-4 phtalique dicarbonyle.

Parmi les motifs polyfonctionnels non sulfonés (mNS[4]) (diimino/"lactame"), on peut mentionner ceux dont

* le sous-motif diimino est un motif aliphatique dont le reste aliphatique est un groupe alkylène linéaire, ramifié ou cyclique contenant de 2 à 50, de préférence de 2 à 20 atomes de carbone et peut être interrompu par un ou plusieurs hétéroatomes d'oxygène ou azote tertiaire, comme les motifs éthylènediimino, tétraméthylènediimino, hexaméthylènediimino, méthylpentaméthylènediimino, 3-oxa-pentaméthylènediimino, 3,6-dioxa-octaméthylène-1,8-diimino
* le sous-motif diimino est un motif aromatique dans lesquel le reste aromatique est un radical phénylène ou un radical bivalent constitué d'une combinaison de plusieurs noyaux benzéniques éventuellement substitués, ortho- ou péri-condensés ou liés entre eux par des groupes inertes, tels que lien valentiel simple, radical alkylène, groupe oxy, groupe oxo, groupe sulfonyl, comme le motif paraphénylènediimino, le diphénylméthanediimino dont les noyaux phényles sont éventuellement substitués par un radical alkyle en $C_2$-$C_3$
* le sous-motif "lactame" est un motif aliphatique ou aromatique dont le reste aliphatique ou aromatique contient de 2 à 20 atomes de carbone, comme les motifs 6-iminocaproyle, 11-iminoundécanoyle, 12-iminododécanoyle , 3-imino-2-diméthylpropionyle, 4-(β-iminoéthyl)benzoyle.

Parmi les motifs polyfonctionnels sulfonés (mS), on peut mentionner

* des motifs dicarbonyles, aliphatiques dans lesquels le reste aliphatique contient de 2 à 10 atomes de carbone, éventuellement substitué par au moins un radical aryle, phényle notamment, et présentant au moins un substituant sulfo lié à un atome de carbone, comme les motifs sulfosuccinoyle, 3-sulfoglutaroyle, 3-(4-sulfophényl)glutaroyle
* des motifs dicarbonyles, aromatiques dans lesquels le reste aromatique est un radical phénylène ou un radical bivalent constitué d'une combinaison de plusieurs noyaux benzéniques ortho-ou péri-condensés ou liés entre eux par des groupes inertes, tels que lien valentiel simple, radical alkylène, groupe oxy, groupe oxo, groupe sulfonyl, ledit reste aromatique présentant au moins un substituant sulfo lié à un atome de carbone, comme les motifs sulfophtaloyle, sulfotéréphtaloyle, sulfoisophtaloyle, sulfo-orthophtaloyle, sulfonaphtalènedicarbonyle, disulfo- et trisulfo-naphtalènedicarbonyle, 5-(4-sulfophénoxy)-isophtaloyle, 5-(2-sulfophényl)-isophtaloyle, 5-(4-sulfophénoxy)-isophtaloyle, sulfo-diphényl-dicarbonyle, sulfo-diphénylsulfone-4,4'-dicarbonyle, sulfodiphénylméthane-4,4'-dicarbonyle
* des motifs à groupes oxy, aliphatiques dans lesquels le reste aliphatique contient de 2 à 10 atomes de carbone et présentant au moins un substituant sulfo lié directement à un atome de carbone, comme les motifs 2,3-dioxypropane sulfonique, 1,5-dioxypentane-3-sulfonique, ou indirectement comme les motifs 2,3-dioxypropane poly (oxyéthylène) sulfonique, 2,3-dioxypropane poly(oxyéthylène) phénol sulfonique,
* des motifs à groupes oxy et carbonyle, aliphatiques dans lesquels le reste aliphatique contient de 2 à 10 atomes de carbone, et présentant au moins un substituant sulfo lié à un atome de carbone, comme les motifs 3-oxysulfopropionoyle, 5-oxy-3-sulfopentanoyle
* des motifs à groupes imino, aromatiques présentant au moins un substituant sulfo lié à un atome de carbone, comme les motifs sulfoparaphénylènediimino.

Parmi les motifs polyfonctionnels non sulfonés éventuels, on peut mentionner

* des motifs à groupes imino, aliphatiques, dont le reste aliphatique est un groupe alkylène linéaire ou ramifié contenant de 2 à 50, de préférence de 2 à 20 atomes de carbone et peut être interrompu par un ou plusieurs hétéroatomes d'oxygène ou azote tertiaire, comme les motifs éthylènediimino, tétraméthylènediimino, hexaméthylènediimino, 3-oxa-pentaméthylènediimino, 3,6-dioxa-octaméthylène-1,8-diimino
* des motifs à groupes imino, aromatiques, comme le motif paraphénylènediimino
* des motifs à groupes oxy, aliphatiques ou cycloaliphatiques comme les motifs

  . oxyalkylèneoxy dont le reste alkylène est linéaire ou ramifié ou oxycycloalkylèneoxy, et contient de 2 à 12, de préférence de 2 à 6 atomes de carbone comme les motifs oxyéthylèneoxy, 1,3-propanedioxy, oxypropylèneoxy, 2,2-propane diméthoxy, 1,4-cyclohexane diméthoxy et leurs homologues supérieurs oxy[poly(cyclo)alkylèneoxy] contenant de 2 à 150 motifs (cyclo)alkylèneoxy,
  . alcane trioxy contenant de 3 à 6 atomes de carbone comme les motifs 1,2,3-propane trioxy, 1,2,4-butane trioxy et leurs homologues supérieurs poly(alcane trioxy) contenant de 2 à 10 motifs alcanetrioxy

* des motifs à groupes oxy et imino, aliphatiques, aromatiques, hétérocycliques, dont les restes aliphatiques, aromatiques, hétérocycliques, contiennent de 2 à 20 atomes de carbone, comme les motifs 5-iminopentanoxy-1, 4-iminométhylcyclohexaneméthoxy, 5-imino-2-éthylpentanoxy, oxyisophtalique diimino

* des <u>motifs dicarbonyles hydroxy et/ou carboxy subsitués,</u> comme le propane2-hydroxy 2-carboxy dicarbonyle.

L'unité (PAS) comprend préférentiellement des motifs correspondant aux polyamides aliphatiques de type PA 4, PA 6, PA 10, PA 11, PA 12, PA 6.6, PA 4.6, PA 10.6 et contenant en outre des motifs sulfonés, de préférence dicarbonyles sulfonés (sulfosuccinoyle ou sulfoisophtaloyle notamment), tout ou partie des motifs dicarbonyles aliphatiques non sulfonés pouvant être remplacée par des motifs dicarbonyles aromatiques.

Chaque unité polyoxyalkylène (POA) peut être liée à une unité polyamide sulfonée (PAS) par l'intermédiaire de groupes liants semblables ou différents comprenant au moins un hétéroatome N, O , S ; de tels groupes liants peuvent être des groupes amides, esters, carbamates, oxy, ureylène, thio...

Lesdits copolymères (C) peuvent être obtenus par

- réaction entre un prépolymère polyamide sulfoné (PP1) contenant l'unité (PAS) à terminaisons acide et/ou amine avec un prépoplymère polyoxyalkyléné (PP2) contenant l'unité (POA) dont au moins une terminaison est susceptible de réagir avec les terminaisons acide et/ou amine dudit prépolymère (PP1), soit directement, soit par l'intermédiaire d'un agent susceptible de former un pont
- puis éventuellement réaction avec un composé susceptible de consommer les fonctions amino -NH$_2$

Ledit prépoplymère polyamide sulfoné (PP1) peut être préparé d'une manière connue, avec contrôle du degré d'avancement de la polycondensation pour obtenir un prépolymère de masse moléculaire désirée et en mettant en oeuvre de préférence un excès de monomère diacide afin de favoriser la formation de terminaisons acides.

Comme exemples de prépolymère polyoxyalkyléné (PP2) dont au moins une terminaison est susceptible de réagir avec les terminaisons acide et/ou amine dudit prépolymère (PP1), on peut mentionner ceux présentant au moins une terminaison alcool, amine, acide, époxy, uréthane ... , comme

. les polyoxypropylène et/ou polyoxyéthylène diamines ou triamines, comme les JEFFAMINES® D, ED, EDR et T commercialisées par HUNTSMAN présentant une masse moléculaire de l'ordre de 1500 à 5 000
. les polyéthylèneglycols, les polypropylèneglycols, les copolymères d'éthylène glycol et de propylène glycol séquencés ou statistiques présentant une masse moléculaire de l'ordre de 200 à 10 000, comme les PLURONICS PE de BASF
. les polyoxyéthylène et/ou polyoxypropylène diépoxy présentant une masse moléculaire de l'ordre de 300 à 5 000
. les polyoxyéthylène et/ou polyoxypropylène diisocyanates présentant une masse moléculaire de l'ordre de 3000 à 5 000
. les polyoxyéthylène et/ou polyoxypropylène dicarboxyliques présentant une masse moléculaire de l'ordre de 3000 à 5 000
. les méthoxypolyoxypropylène et/ou polyoxyéthylènemonoamines, comme les JEFFAMINES® commercialisées par HUNTSMAN, présentant une masse moléculaire de l'ordre de 90 à 5 000
. les méthoxypolyoxypropylène et/ou polyoxyéthylènemonohydroxy, présentant une masse moléculaire de l'ordre de 1000 à 25 000
. les méthoxypolyoxypropylène et/ou polyoxyéthylènemonocarboxy, présentant une masse moléculaire de l'ordre de 5 000
. les méthoxypolyoxypropylène et/ou polyoxyéthylènemonoisocyanates, présentant une masse moléculaire de l'ordre de 3000 à 5000.

Le taux de fonctions SO$_3$M, exprimé en masse de fonction SO$_3^-$ , dans ledit prépolymère polyamide sulfoné (PP1) est tel qu'il représente au moins 0,1% , de préférence au moins 0,2%, tout particulièrement au moins 0,4% , notamment de 0,4 à 15% de la masse totale de prépolymère polyamide sulfoné (PP1) et de prépolymère polyoxyalkyléné (PP2).

Les quantités respectives de polymère (PP2) et (PP1) sont telles que le rapport masse de (PP2) / masse de (PP1) est de 95/5 à 30/70, de préférence de 90/10 à 40/60, tout particulièrement de 85/15 à 50/50.

Parmi les composés susceptibles de consommer les fonctions amino -NH$_2$ , on peut mentionner

- les acides carboxyliques, comme l'acide succinique, l'acide isophtalique sulfonate de sodium
- les anhydrides carboxyliques, comme l'anhydride succinique, l'anhydride phtalique, l'anhydride maléique
- les époxydes mono ou poly fonctionnels, comme les époxyalcanes contenant de 4 à 18 atomes de carbone
- les monoisocyanates, comme l'isocyanate de dodécane
- les acrylates ou méthacrylates quaternaires, comme les MATQUAT d'Atochem.

Ils peuvent être mis en oeuvre selon une quantité telle que la quantité de fonctions -$NH_2$ éventuellement présentes dans le copolymère final ne représente pas plus de 80 milliéquivalents par kilogramme de copolymère final.

Ledit copolymère (C) peut également être obtenu, et ce d'une manière préférentielle, par polycondensation des monomères (M) dont dérive l'unité (PAS) en présence d'un prépolymère (PP) contenant l'unité polyoxyalkylène (POA) et portant des motifs ou fonctions susceptibles de se condenser ou réagir avec au moins un desdits monomères, et éventuellement postréaction avec un agent consommateur de fonctions amino -$NH_2$.

Parmi les monomères dicarboxyliques non sulfonés (MDC) susceptibles de former des motifs polyfonctionnels non sulfonés (mNS[1]) par condensation avec une diamine, des motifs polyfonctionnels non sulfonés (mNS[3]) par condensation avec un lactame ou susceptibles de former des motifs dicarbonyles non sulfonés éventuels de formule -C(O)-A-C(O)-, on peut mentionner

- les acides dicarboxyliques aromatiques dont le reste aromatique est éventuellement substitué par au moins un radical alkyle contenant de 1 à 4 atomes de carbone un radical hydroxy, tels que les acides phtalique, téréphtalique, isophtalique, orthophtalique, les acides anthracène, 1,8-naphtalène, 1,4-naphtalène, biphenyl dicarboxyliques, les acides hydroxy-5 isophtalique, hydroxy-4 isophtalique, hydroxy-4 phtalique
- les acides dicarboxyliques aliphatiques ou cycloaliphatiques dont le reste aliphatique ou cycloaliphatique contient de 4 à 10 atomes de carbone, tels que les addes adipique, glutarique, succinique, triméthyladipique, pimélique, azelaique, sebacique, suberique, itaconique, maleique, fumarique, les acides cyclopentane dicarboxyliques, cyclohexane dicarboxyliques, les addes hydroxy-2 méthylsuccinique, hydroxyméthylglutarique, hydroxyglutarique.

Parmi les monomères diamines non sulfonés (MDA) susceptibles de former des motifs polyfonctionnels non sulfonés (mNS[1]) par condensation avec un monomère dicarboxylique non sulfoné, ou des motifs polyfonctionnels non sulfonés (mNS[4]) par condensation avec un lactame , on peut mentionner :

- les diamines aliphatiques contenant de 2 à 50 atomes de carbone comme les alkylènediamines, dont le groupe alkylène linéaire, ramifié ou cyclique est éventuellement interrompu par un ou plusieurs hétéroatomes oxygène ou azote tertiaire, telles que l'éthylènediamine, la tetraméthylènediamine, l'hexaméthylènediamine, la 3-oxa-pentaméthylènediamine, la 3,6-dioxa-octaméthylène-1,8-diamine
- les diamines aromatiques, dans lesquels le reste aromatique est un radical phénylène ou un radical bivalent constitué d'une combinaison de plusieurs noyaux benzéniques ortho-ou péri-condensés ou liés entre eux par des groupes inertes, tels que lien valentiel simple, radical alkylène, groupe oxy, groupe oxo, groupe sulfonyl, comme les arylènediamines tels que la paraphénylènediamine, le diaminodiphénylméthane dont les restes phényles sont éventuellement substitués par un radical alkyle en $C_2$ - $C_3$.

Parmi les monomères aminoacides non sulfonés (MAA) susceptibles de former des motifs polyfonctionnels non sulfonés (mNS[2]), des motifs polyfonctionnels non sulfonés (mNS[3]) ou (mNS[4]) par condensation avec un monomère dicarboxylique non sulfoné ou un monomère diamine non sulfoné, on peut mentionner :

- les aminoacides monocarboxyliques aromatiques, aliphatiques, hétérocycliques, contenant de 2 à 20 atomes de carbone, et leurs lactames comme l'acide 6-aminocaproïque, le caprolactam, l'acide 3-amino-2-diméthylpropionique, l'acide 4-(β-aminoéthyl)benzoïque, le lauryllactame.

Parmi les monomères sulfonés (MS) susceptibles de former des motifs polyfonctionnels sulfonés (mS), on peut mentionner :

- ceux présentant deux fonctions réactives carbonyles comme

    * les acides dicarboxyliques aromatiques, dont le reste aromatique le reste aromatique est un radical phénylène ou un radical bivalent constitué d'une combinaison de plusieurs noyaux benzéniques ortho-ou péri-condensés ou liés entre eux par des groupes inertes, tels que lien valentiel simple, radical alkylène, groupe oxy, groupe oxo, groupe sulfonyl, et est éventuellement substitué par au moins un radical substituant hydroxy, tels que les acides sulfophtaliques, sulfotéréphtaliques, sulfoisophtaliques, sulfo-orthophtaliques, 4-sulfonaphtalène-2,7 dicarboxylique, 5-(4-sulfophényl)-isophtalique, 5-(2-sulfophényl)-isophtalique, 5-(4-sulfophénoxy)-isophtalique, les sulfo-bis(hydroxycarbonyl)-4,4' diphénylsulfones, les acides suifo-diphényl-dicarboxyliques, les sulfophényldicarboxybenzène sulfonates, les sulfo-bis(hydroxycarbonyl)-4,4' diphénylméthanes, les acides sulfo-phénoxy-5 isophtaliques et d'une manière plus générale ceux décrits dans US-A-3,734,874
    * les acides dicarboxyliques aliphatiques dont le reste aliphatique contient de 2 à 10 atomes de carbone et est éventuellement substitué par un radical aryle, phényle notamment, tels que les acides sulfosuccinique, 3-sulfoglutarique, 3-(4-sulfophényl)glutarique ...

sous forme acides ou esters en $C_1$-$C_4$

- <u>ceux présentant deux fonctions hydroxyles réactives</u> comme les diols sulfoaliphatiques dont le reste aliphatique contient de 2 à 10 atomes de carbone, tels que les acides 2,3-dihydroxypropanesulfonique, 1,5-dihydroxypentane-3-sulfonique, les diols aliphatiques contenant de 2 à 3 atomes de carbone substitués par des groupes poly(oxyéthylène) sulfoniques ou poly(oxyéthylène) phénol sulfoniques, comme les 1,2-propane diols poly(oxyéthylène) sulfoniques et 1,2-propane diols poly(oxyéthylène) phénol sulfoniques

- <u>ceux présentant une fonction hydroxy et une fonction carboxy</u> réactives comme les hydroxyacides aliphatiques dont le reste aliphatique contient de 2 à 10 atomes de carbone, tels que les acides 3-hydroxysulfopropionique, 5-hydroxy-3-sulfopentanoïque

- <u>ceux présentant deux fonctions amino,</u> comme l'acide 2,5-diaminobenzène sulfonique

Les monomères sulfonés (MS) préférentiels sont les acides sulfo-isophtaliques et sulfosucciniques.

Parmi les <u>monomères non sulfonés</u> susceptibles de former des motifs polyfonctionnels non sulfonés de formule (i), on peut mentionner :

- les <u>diols ou triols</u> contenant de 2 à 20 atomes de carbone comme

   * l'éthylène glycol et ses homologues supérieurs pouvant contenir jusqu'à 20 motifs oxyéthylène, en particulier l'éthylène glycol, le diéthylène glycol et le triéthylène glycol
   * les alkylènes glycols linéaires ou ramifiés pouvant contenir jusqu'à 150 atomes de carbone éventuellement interrompus par un ou plusieurs hétéroatome(s) d'oxygène, comme le le 1,3-propanediol, le propylène glycol, le dipropylène glycol, 2,2-diméthylolpropane, 1,4-cyclohexane diméthanol
   * le glycérol, le 1,2,4 butane triol et le 1,2,3 butane triol et leurs homologues supérieurs pouvant contenir jusqu'à 10 motifs répétitifs

- les <u>acides hydroxycarboxyliques aliphatiques</u> contenant de 2 à 10 atomes de carbone comme les acides 3-hydroxypropionique, 4-hydroxybutyrique, citrique, 4-hydroxyisophtalic acide, 2,5-dihydroxytétéphtalic acide

   . les aminoalcools aliphatiques, aromatiques, hétérocycliques contenant de 2 à 20 atomes de carbone comme le 5-aminopentanol-1, le 4-aminométhyl cyclohexaneméthanol, le 5-amino-2-éthylpentanol.

Les monomères (M) sont de préférence choisis parmi ceux dont dérivent les polyamides aliphatiques du type PA 4, PA 6, PA 10, PA 11, PA 12, PA 6.6, PA 4.6, PA 10.6 et comprenant en outre des monomères sulfonés, de préférence acides dicarboxyliques sulfonés (acides sulfosucciniques ou sulfoisophtaliques notamment), tout ou partie des acides dicarboxyliques aliphatiques non sulfonés pouvant être remplacée par des acides dicarboxyliques aromatiques.

Parmi les prépolymères (PP) présentant une chaîne polyoxyalkylène (POA) portant des motifs susceptibles de se condenser ou réagir avec au moins un desdits monomères dont dérive le polyamide sulfoné, on peut mentionner ceux comprenant de 2 à 200, de préférence de 5 à 150 motifs oxyalkylène semblables ou différents, dont le reste alkylène linéaire ou ramifié contient de 2 à 12, de préférence de 2 à 6 atomes de carbone, tout particulièrement 2 ou 3 atomes de carbone, et présentant au moins une terminaison alcool, amine, acide, époxy, uréthane,... comme

. les polyoxypropylène et/ou polyoxyéthylène diamines ou triamines, comme les JEFFAMINES® D, ED, EDR et T commercialisées par HUNTSMAN présentant une masse moléculaire de l'ordre de 1500 à 5 000
. les polyéthylèneglycols, les polypropylèneglycols, les copolymères d'éthylène glycol et de propylène glycol séquencés ou statistiques présentant une masse moléculaire de l'ordre de 200 à 10 000, comme les PLURONICS PE de BASF
. les polyoxyéthylène et/ou polyoxypropylène diépoxy présentant une masse moléculaire de l'ordre de 300 à 5 000
. les polyoxyéthylène et/ou polyoxypropylène diisocyanates présentant une masse moléculaire de l'ordre de 3000 à 5 000
. les polyoxyéthylène et/ou polyoxypropylène dicarboxyliques présentant une masse moléculaire de l'ordre de 3000 à 5 000
. les méthoxypolyoxypropylène et/ou polyoxyéthylènemonoamines, comme les JEFFAMINES® commercialisées par HUNTSMAN, présentant une masse moléculaire de l'ordre de 90 à 5 000
. les méthoxypolyoxypropylène et/ou polyoxyéthylènemonohydroxy, présentant une masse moléculaire de l'ordre de 1000 à 25 000

- les méthoxypolyoxypropylène et/ou polyoxyéthylènemonocarboxy, présentant une masse moléculaire de l'ordre de 5 000
- les méthoxypolyoxypropylène et/ou polyoxyéthylènemonoisocyanates, présentant une masse moléculaire de l'ordre de 3000 à 5000.

L'opération de polycondensation des monomères (M) dont dérive l'unité (PAS) en présence dudit prépolymère (PP) contenant l'unité polyoxyalkylène (POA) peut être réalisée :

- par mise en contact du prépolymère (PP) et des différents monomères (M) sous forme de poudre, sous forme liquide, ou en solution aqueuse,

  * les quantités relatives des différents monomères (M) étant telles que le rapport molaire nombre de leurs fonctions carboxyliques / nombre de leurs fonctions amines soit d'au moins 1, de préférence d'au moins 1,05 , tout particulièrement d'au moins 1,1
  * la quantité de monomère sulfoné, exprimée en masse de de $SO_3$ , est telle qu'elle représente au moins 0,1% , de préférence au moins 0,2%, tout particulièrement au moins 0.4% , notamment de 0,4 à 15% de la masse totale de monomères (M) et prépolymère (PP) mise en oeuvre
  * les quantités relatives de prépolymère (PP) et de monomères (M) étant telles que le rapport masse du prépolymère (PP) / masse de l'ensemble des monomères (M) est de 95/5 à 30/70, de préférence de 90/10 à 40/60, tout particulièrement de 85/15 à 50/50

- puis polycondensation proprement dite sous atmosphère inerte, à une température de l'ordre de 190 à 280 °C, de préférence de l'ordre de 220 à 270°C, avec distillation de l'eau formée
- et éventuellement postcondensation ou post réaction du copolymère formé avec un composé consommateur de fonctions amino -$NH_2$. en quantité telle que la quantité de fonctions -$NH_2$ éventuellement présentes dans le copolymère final ne représente pas plus de 80 milliéquivalents par kilogramme de copolymère final.

L'opération de mise en contact peut être réalisée à une température pouvant aller de la température ambiante à 100°C.

L'opération de polycondensation proprement dite, peut être réalisée en présence d'un catalyseur de polyamidification ; on peut citer notamment l'acide hypophosphoreux, l'acide phénylphosphinique, l'acide phénylphosphonique ou le le phosphite de tris(nonylphényle) ; celui-ci peut être présent selon une quantité pouvant aller jusqu'à 1% , de préférence jusqu'à 0,5% en poids par rapport au poids total de prépolymère (PP) et monomères (M)
Cette opération est de préférence réalisée par étapes,

- une étape de montée en température, par exemple de la température ambiante jusqu'à 280°C, de préférence jusqu'à 270°C, à pression atmosphérique ; cette étape dure généralement de 3 à 7 heures, étape pendant laquelle l'eau distille
- un palier dans ces mêmes conditions, pendant une durée généralement de l'ordre de 10 minutes à 2 heures, de préférence 1 heure
- un palier à même température, sous pression réduite (inférieure à 10mbar, de préférence de 2 à 3 mbar) pendant une durée généralement de l'ordre de 1 à 3 heures avant mise sous pression atmosphérique et refroidissement du copolymère obtenu.

Si nécessaire une étape de postcondensation à l'aide de composés susceptibles de comsommer les fonctions amino -$NH_2$ , peut être réalisée pour éliminer au moins partiellement les fonctions -$NH_2$ présentes.
Parmi les composés susceptibles de consommer les fonctions amino -$NH_2$ , on peut mentionner

- les acides carboxyliques, comme l'acide succinique, l'acide isophtalique sulfonate de sodium
- les anhydrides carboxyliques, comme l'anhydride succinique, l'anhydride phtalique, l'anhydride maléique
- les époxydes mono ou poly fonctionnels, comme les époxyalcanes contenant de 4 à 18 atomes de carbone
- les monoisocyanates, comme l'isocyanate de dodécane
- les acrylates ou méthacrylates quaternaires, comme les MATQUAT d'Atochem.

Ils peuvent être mis en oeuvre selon une quantité telle que la quantité de fonctions -$NH_2$ éventuellement présentes dans le copolymère final ne représente pas plus de 80 milliéquivaients par kilogramme de copolymère final.
Un deuxième objet de l'invention consiste en un agent détergent des surfaces dures ou textiles, notamment en polymère synthétique, tout particulièrement des surfaces textiles en polyamide, et/ou en un agent susceptible d'apporter auxdites surfaces des propriétés de résistance aux taches (stain resistance) et/ou permettant de faciliter l'enlèvement des taches et de la salissure (soil release) desdites surfaces, ledit agent comprenant au moins un desdits copolymères (C) hydrosolubles ou hydrodispersables décrit ci-dessus.

Un troisième objet de l'invention consiste en l'utilisation dudit copolymère (C) comme agent détergent des surfaces dures ou textiles, notamment en polymère synthétique, tout particulièrement des surfaces textiles en polyamide, et/ou comme agent susceptible d'apporter auxdites surfaces des propriétés de résistance aux taches (stain resistance) et/ou permettant de faciliter l'enlèvement des taches et de la salissure (soil release) desdites surfaces.

Un quatrième objet de l'invention consiste en un procédé pour nettoyer les surfaces dures ou textiles, notamment en polymère synthétique, tout particulièrement les surfaces textiles en polyamide, et/ou pour apporter auxdites surfaces des propriétés de résistance aux taches et/ou pour faciliter l'enlèvement des taches et de la salissure desdites surfaces, par traitement non permanent desdites surfaces à l'aide dudit copolymère (C) en solution ou dispersion aqueuse.

Ledit copolymère (C) peut être mis en oeuvre dans des formulations solides ou des formulations aqueuses liquides de nettoyage et/ou de traitement ; lesdites formulations peuvent contenir de 0,05 à 10, de préférence de 0,1 à 2% en poids de copolymère (C).

Un premier mode de réalisation consiste dans le nettoyage et/ou le traitement des surfaces dures à l'aide dudit copolymère (C).

Lesdites surfaces dures peuvent être des surfaces en céramique, en verre, porcelaine.... On peut citer par exemple l'utilisation dudit copolymère soit tel quel en solution aqueuse, soit au sein d'une formulation aqueuse, pour le nettoyage de la vaisselle, des salles de bain, cuisines ...

Un aspect particulier de cette invention concerne des compositions aqueuses de rinçage de parois de douches (aqueous shower rinsing compositions) et des méthodes pour garder propres lesdites parois. Les brevets américains US 5,536,452 et US 5,587,022 décrivent des compositions et des méthodes similaires à celles de la présente invention. Ainsi, pour une description générale des compositions aqueuses de rinçage des parois de douches (en abrégé "de douches") et des méthodes pour leur application, les descriptions des brevets américains US 5,536,452 et US 5,587,022 sont incorporées par référence dans la présente description.

Lesdites parois peuvent être en porcelaine, carreaux de céramique, plexiglass, fibres de verre ...

Les composants actifs principaux des compositions aqueuses de rinçage de douches de la présente invention sont au moins un tensio-actif décrit ci-dessous, un agent chélatant de métaux, et un polyamide aussi dénommé ci-dessous copolymère (C). Les agents chélatants de métaux préférés sont l'acide éthylènediaminetétraacétique (EDTA) et analogues.

Les compositions aqueuses de rinçage de douches contiennent typiquement de l'eau avec éventuellement au moins un alcool inférieur suivant une quantité importante et chacun des constituants actifs suivant des quantités plus faibles, typiquement lesdites quantités faibles sont comprises entre environ 0,5% et environ 3% en poids, et encore plus typiquement entre environ 1% et environ 2% en poids.

Certains tensioactifs utilisables dans la présente invention sont décrits dans les brevets américains US 5,536,452 et US 5,587,022 incorporés par référence dans la présente description. Des tensio-actifs encore plus utiles sont décrits dans les demandes de brevets américains US.No. 60/086,113 déposé le 20 mai 1998 et US No. 60/098,148 déposé le 27 août 1998, dont les descriptions sont incorporées dans la présente description par référence. Des tensio-actifs encore plus utiles sont caractérisés comme étant des éthoxylats d'esters gras, par exemple des monooléates de sorbitan éthoxylés et de l'huile de castor éthoxylée. Des exemples spécifiques de tels surfactants sont le monooléate de sorbitan à 20 moles d'oxyde d'éthylène (commercialisé par Rhodia Inc. sous la dénomination ALKAMULS PSMO-20 avec un HLB de 15,0) les huiles de castor à 30 ou 40 moles d'oxyde d'éthylène (commercialisées par Rhodia Inc. sous la dénomination ALKAMULS EL-620 (HLB de 12,0) et EL-719 (HLB de 13,6), respectivement). Le degré d'éthoxylation est de préférence suffisant pour obtenir un tensio-actif ayant un HLB au-dessus de 13.

Les copolymère (C) peuvent être utilisés dans les compositions aqueuses de rinçage de parois de douches suivant une quantité d'environ 0,05% à environ 10% en poids, plus typiquement d'environ 0,1% à environ 2% en poids de la composition aqueuse de rinçage de douches.

Lesdites compositions peuvent être appliquées par pulvérisation sur la surface des parois de douche, après humidification préalable à l'eau desdites parois.

Un deuxième mode de réalisation consiste dans le nettoyage et/ou le traitement des surfaces textiles à l'aide dudit copolymère (C).

D'une manière préférentielle, les surfaces textiles sont en un polymère organique synthétique, en polyamide notamment ; tout particulièrement ce sont des surfaces textiles comme des tapis, moquettes, tissus, vêtements, sous-vêtements, ameublement, articles de sport ..., en polymère organique synthétique, en polyamide notamment.

Ledit copolymère (C) permet d'apporter à ces surfaces textiles des propriétés d'hydrophilie, de résistance aux taches, notamment aux taches grasses (cirage, stylo à bille, rouge à lèvre, huile...) ou aqueuses (café ...).

Il permet également de faciliter l'enlèvement de ces taches ainsi que l'enlèvement de salissures, notamment celles transportées par des semelles de chaussures (poussière, argile, terre ...)

Lesdits copolymères (C) ou les compositions ou formulations comprenant lesdits copolymères (C), mis en solution ou dispersion aqueuse (préalablement ou pendant le traitement), peuvent être déposés sur les surfaces textiles par versement avec frottement éventuel, par vaporisation, par application à l'aide d'un appareil, par lavage et/ou rinçage et/ou adoucissage à la main ou en machine. Ils peuvent également, après imprégnation d'un support en un matériau cellulosique par exemple, être déposés par contact dans un appareil de séchage desdites surfaces textiles.

Un aspect particulier concerne des compositions solides ou liquides pour le lavage et/ou rinçage et/ou adoucissage du linge ou des vêtements à la main ou en machine. Le copolymère (C) permet d'apporter de l'hydrophilie au linge ou aux vêtements, ce qui se traduit par une meilleure pernnéabilité du textile synthétique à la vapeur d'eau et ainsi un meilleur confort au contact de la peau.

Lesdites compositions pour le lavage et/ou rinçage et/ou adoucissage du linge ou des vêtements peuvent contenir de 0,05 à 10, de préférence de 0,1 à 2% en poids de copolymère (C).

Les compositions pour le lavage peuvent en outre comprendre

- des <u>agents tensio-actifs anioniques</u> comme

  - les alkylesters sulfonates de formule R-CH(SO$_3$M)-COOR', où R représente un radical alkyle en C$_{8-20}$, de préférence en C$_{10}$-C$_{16}$, R' un radical alkyle en C$_1$-C$_6$, de préférence en C$_1$-C$_3$ et M un cation alcalin (sodium, potassium, lithium), ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...) ;
  - les alkylsulfates de formule ROSO$_3$M, où R représente un radical alkyle ou hydroxyalkyle en C$_5$-C$_{24}$, de préférence en C$_{10}$-C$_{18}$, M représentant un atome d'hydrogène ou un cation de même définition que ci-dessus, ainsi que leurs dérivés éthoxylénés (OE) et/ou propoxylénés (OP), présentant en moyenne de 0,5 à 30 motifs, de préférence de 0,5 à 10 motifs OE et/ou OP ;
  - les alkylamides sulfates de formule RCONHR'OSO$_3$M où R représente un radical alkyle en C$_2$-C$_{22}$, de préférence en C$_6$-C$_{20}$, R' un radical alkyle en C$_2$-C$_3$, M représentant un atome d'hydrogène ou un cation de même définition que ci-dessus, ainsi que leurs dérivés éthoxylénés (OE) et/ou propoxylénés (OP), présentant en moyenne de 0,5 à 60 motifs OE et/ou OP ;
  - les sels d'acides gras saturés ou insaturés en C$_8$-C$_{24}$, de préférence en C$_{14}$-C$_{20}$, les alkylbenzènesulfonates en C$_9$-C$_{20}$, les alkylsulfonates primaires ou secondaires en C$_8$-C$_{22}$, les alkylglycérol sulfonates, les acides polycarboxyliques sulfonés décrits dans GB-A-1 082 179, les sulfonates de paraffine, les N-acyl N-alkyltaurates, les alkylphosphates, les iséthionates, les alkylsuccinamates les alkylsulfosuccinates, les monoesters ou diesters de sulfosuccinates, les N-acyl sarcosinates, les sulfates d'alkylglycosides, les polyéthoxycarboxylates

    le cation étant un métal alcalin (sodium, potassium, lithium), un reste ammonium substitué ou non substitué (méthyl-, diméthyl-, triméthyl-, tetraméthylammonium, diméthylpiperidinium ...) ou dérivé d'une alcanolamine (monoéthanolamine, diéthanolamine, triéthanolamine ...) avec des <u>agents tensio-actifs non-ioniques</u> comme
  - les alkylphénols polyoxyalkylénés (polyéthoxyéthylénés, polyoxypropylénés, polyoxybutylénés) dont le substituant alkyle est en C$_6$-C$_{12}$ et contenant de 5 à 25 motifs oxyalkylènes ; à titre d'exemple, on peut citer les TRITON X-45, X-114, X-100 ou X-102 commercialisés par Rohm & Haas Cy., les IGEPAL NP2 à NP17 de RHODIA ;
  - les alcools aliphatiques en C$_8$-C$_{22}$ polyoxyalkylénés contenant de 1 à 25 motifs oxyalkylènes (oxyéthylène, oxypropylène) ; à titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy, KYRO EOB commercialisé par The Procter & Gamble Cy, les SYNPERONIC A3 à A9 de ICI, les RHODASURF IT, DB et B de RHODIA ;
  - les produits résultant de la condensation de l'oxyde d'éthylène ou de l'oxyde de propylène avec le propylène glycol, l'éthylène glycol, de masse moléculaire en poids de l'ordre de 2000 à 10000, tels les PLURONIC commercialisés par BASF ;
  - les produits résultant de la condensation de l'oxyde d'éthylène ou de l'oxyde de propylène avec l'éthylènediamine, tels les TETRONIC commercialisés par BASF ;
  - les acides gras éthoxylés et/ou propoxylés en C$_8$-C$_{18}$ contenant de 5 à 25 motifs éthoxylés et/ou propoxylés ;
  - les amides d'acides gras en C$_8$-C$_{20}$ contenant de 5 à 30 motifs éthoxylés ;
  - les amines éthoxylées contenant de 5 à 30 motifs éthoxylés ;
  - les amidoamines alcoxylées contenant de 1 à 50, de préférence de 1 à 25, tout particulièrement de 2 à 20 motifs oxyalkylène (oxyéthylène de préférence ;
  - les oxydes d'amines tels que les oxydes d'alkyl C$_{10}$-C$_{18}$ diméthylamines, les oxydes d'alkoxy C$_8$-C$_{22}$ éthyl

dihydroxy éthylamines ;

. les hydrocarbures terpéniques alcoxylés tels que les a- ou b- pinènes éthoxylés et/ou propoxylés, contenant de 1 à 30 motifs oxyéthylène et/ou oxypropylène ;

. les alkylpolyglycosides pouvant être obtenus par condensation (par exemple par catalyse acide) du glucose avec des alcools gras primaires (US-A-3 598 865 ; US-A-4 565 647 ; EP-A-132 043 ; EP-A-132 046 ...) présentant un groupe alkyle en $C_4$-$C_{20}$, de préférence en $C_8$-$C_{18}$, ainsi qu'un nombre moyen de motifs glucose de l'ordre 0,5 à 3, de préférence de l'ordre de 1,1 à 1,8 par mole d'alkylpolyglycoside (APG) ; on peut mentionner notamment ceux présentant

* un groupe alkyle en $C_8$-$C_{14}$ et en moyenne 1,4 motif glucose par mole
* un groupe alkyle en $C_{12}$-$C_{14}$ et en moyenne 1,4 motif glucose par mole
* un groupe alkyle en $C_8$-$C_{14}$ et en moyenne 1,5 motif glucose par mole
* un groupe alkyle en $C_8$-$C_{10}$ et en moyenne 1,6 motif glucose par mole commercialisés respectivement sous les dénominations GLUCOPON 600 EC®, GLUCOPON 600 CSUP®, GLUCOPON 650 EC®, GLUCOPON 225 CSUP®, par HENKEL.

et/ou avec des <u>agents tensioactifs amphotères et zwitterioniques</u>, comme les alkyl-bétaïnes, les alkyldiméthylbétaïnes, les alkylamidopropylbétaines, les alkylamido-propyldiméthylbétaines, les alkyltriméthyl-sulfobétaïnes, les dérivés d'imidazoline tels que les alkylamphoacétates, alkylamphodiacétates, alkylampho-propionates, alkyl-amphodipropionates, les alkylsultaïnes ou les alkylamidopropyl-hydroxysultaïnes, les produits de condensation d'acides gras et d'hydrolysats de protéines, les dérivés amphotères des alkylpolyamines comme l'Amphionic XL® commercialisé par Rhodia, Ampholac 7T/X® et Ampholac 7C/X® commercialisés par Berol Nobel, les protéines ou hydrolysats de protéines ;

et/ou avec des <u>agents tensioactifs cationiques</u>, comme les chlorures de dialkyldiméthylammonium, les chlorures d'alkylbenzyldiméthylammonium, les sulfates de méthyle et d'alkylimidazolinium, les sulfates de méthyle et de méthyl-bis(alkylamidoéthyl)-2-hydroxyéthylammonium ;

lesdits agents tensio-actifs étant mis en oeuvre en quantité de l'ordre de 5 à 70%, de préférence de 5 à 50% du poids de ladite composition ;

<u>des adjuvants de détergence ("builders") minéraux ou organiques</u>, en quantité telle que la quantité totale d'adjuvant de détergence soit de l'ordre de 5 à 80% du poids de ladite composition, adjuvants de détergence tels que

- les polyphosphates (tripolyphosphates, pyrophosphates, orthophosphates, hexamétaphosphates) de métaux alcalins, d'ammonium ou d'alcanolamines

- les tetraborates ou les précurseurs de borates

- les carbonates (bicarbonates, sesquicarbonates) alcalins ou alcalino-terreux

- les silicates de métaux alcalins

- les cogranulés de silicates hydratés de métaux alcalins et de carbonates de métaux alcalins (sodium ou de potassium) décrits dans EP-A-488 868, pour les compositions détergentes en poudre

- les aluminosilicates cristallins ou amorphes de métaux alcalins (sodium, potassium) ou d'ammonium, tels que les zéolithes A, P, X, ...

- les polyphosphonates hydrosolubles (éthane 1-hydroxy-1, 1-diphosphonates, sels de méthylène diphosphonates, ...)
- les sels hydrosolubles de polymères ou copolymères carboxyliques tels que les sels hydrosolubles d'acides polycarboxyliques de masse moléculaire de l'ordre de 2000 à 100 000, obtenus par polymérisation ou copolymérisation d'acides carboxyliques éthyléniquement insaturés tels que acide acrylique, acide ou anhydride maléique, acide fumarique, acide itaconique, acide mésaconique, acide citraconique, acide méthylènemalonique, et tout particulièrement les polyacrylates de masse moléculaire de l'ordre de 2 000 à 10 000 (US-A-3 308 067), les copolymères d'acide acrylique et d'anhydride maléique de masse moléculaire de l'ordre de 5 000 à 75 000 (EP-A-66 915)
- les éthers polycarboxylates (acide oxydisuccinique et ses sels, tartrate monosuccinic acide et ses sels, tartrate disuccinic acide et ses sels

- les éthers hydroxypolycarboxylates
- l'acide citrique et ses sels, l'acide mellitique, l'acide succinique et leurs sels
- les sels d'acides polyacétiques (éthylènediaminetetraacétates, nitrilotriacétates, N-(2 hydroxyéthyl)-nitrilodiacétates)
- les acides alkyl C5-C20 succiniques et leurs sels(2-dodécénylsuccinates, lauryl succinates, ...)
- les esters polyacétals carboxyliques
- l'acide polyaspartique, l'acide polyglutamique et leurs sels
- les polyimides dérivés de la polycondensation de l'acide aspartique et/ou de l'acide glutamique
- les dérivés polycarboxyméthylés de l'acide glutamique [comme l'acide N,N-bis(carboxyméthyl) glutamique et ses sels, de sodium notamment] ou d'autres acides aminés
- les aminophosphonates tels que les nitrilotris(méthylène phosphonates)

des agents anti-salissures autres, en quantités de l'ordre de 0,01-10%, de préférence de l'ordre de 0,1 à 5%, et tout particulièrement de l'ordre de 0,2-3% en poids, agents tels que

- les dérivés cellulosiques tels que les hydroxyéthers de cellulose, la méthylcellulose, l'éthylcellulose, l'hydroxypropyl méthylcellulose, l'hydroxybutyl méthylcellulose

- les polyvinylesters greffés sur des troncs polyalkylènes tels que les polyvinylacétates greffés sur des troncs polyoxyéthylènes (EP-A-219 048)

- les alcools polyvinyliques

  . les copolymères polyesters à base de motifs éthylène téréphtalate et/ou propylène téréphtalate et polyoxyéthylène téréphtalate, comportant éventuellement des motifs sulfoisophtaloyles dans leur chaîne
  . les copolymères polyesters à base de motifs éthylène téréphtalate et/ou propylène téréphtalate et polyoxyéthylène et/ou polyoxypropylène
  . les oligomères copolyesters téréphtaliques à terminaison polyalkylèneoxyalkyles sulfonés, sulfoaroyles
  . les oligomères copolyesters téréphtaliques contenant des motifs sulfoisophtaloyles dans leur chaîne

des agents antiredéposition, en quantités d'environ 0,01-10% en poids pour une composition détergente en poudre, d'environ 0,01-5% en poids pour une composition détergente liquide, agents tels que

- la carboxyméthylcellulose
- les oligomères polyesters sulfonés obtenus par condensation de l'acide isophtalique, du sulfosuccinate de diméthyle et de diéthylène glycol (FR-A-2 236 926) ;
- les sels hydrosolubles de polymères ou copolymères carboxyliques tels que les sels d'acide polyacrylique, les copolymères d'acide acrylique et d'anhydride maleique

des agents de blanchiment, en quantité d'environ 0,1-20%, de préférence 1-10% du poids de ladite composition détergente en poudre, tels que

- les perborates tels que le perborate de sodium monohydraté ou tétrahydraté
- les composés peroxygénés tels que le carbonate de sodium peroxyhydraté, le pyrophosphate peroxyhydraté, l'urée peroxyhydratée, le peroxyde de sodium, le persulfate de sodium
- les acides percarboxyliques et leurs sels (appelés "percarbonates")

de préférence associés à un activateur de blanchiment générant in situ dans le milieu lessiviel, un peroxyacide carboxylique ; parmi ces activateurs, on peut mentionner, la tetraacétyléthylène diamine, la tetraacétyl méthylène diamine, le tetraacétyl glycoluryl, le p-acétoxybenzène sulfonate de sodium, le pentaacétyl glucose, l'octaacétyl lactose, ...

des agents suppresseurs de mousses, en quantités pouvant aller jusqu'à 5% en poids, agents tels que

- les acides gras monocarboxyliques en $C_{10}$-$C_{24}$ ou leurs sels alcalins, d'ammonium ou d'alcanolamines, les triglycérides d'acides gras

- les hydrocarbures saturés ou insaturés aliphatiques, alicycliques, aromatiques ou hétérocycliques, tels que les paraffines, les cires

- les N-alkylaminotriazines

- les monostéarylphosphates, les monostéaryl alcool phosphates

- les huiles ou résines polyorganosiloxanes éventuellement combinées avec des particules de silice

des agents adoucissants, en quantités d'environ 0,5-10% en poids, agents tels que les argiles
des enzymes en quantité pouvant aller jusqu'à 5 mg en poids, de préférence de l'ordre de 0,05-3 mg d'enzyme active /g de composition détergente, enzymes telles que les protéases, amylases, lipases, peroxydases, cellulase
des agents inhibiteurs de transfert de couleur
des agents de fluorescence
et d'autres additifs tels que

- des alcools (méthanol, éthanol, propanol, isopropanol, propanediol, éthylène glycol, glycérine)
- des agents tampons ou des charges comme le sulfate de sodium, les carbonates ou bicarbonates de métaux alcalino-terreux.
- des pigments

Les compositions de rinçage et/ou adoucissage peuvent comprendre, à côté du copolymère (C) au moins un agent tensioactif cationique en quantité pouvant aller de 5 à 70%, éventuellement au moins un agent tensioactif nonionique en quantité pouvant aller jusqu'à 10%, des azurants optiques, des colorants, des parfums, des séquestrants ("builders"). Ces compositions sont de préférence liquides.

Un dernier aspect particulier consiste dans le nettoyage et/ou le traitement des tapis ou moquettes.

Le copolymère (C) en solution ou dispersion aqueuse peut être utilisé tout particulièrement dans les formulations pour tapis ou moquettes, comme agent détergent, et/ou comme agent apportant de la résistance aux taches et/ou comme agent facilitant l'enlèvement des taches. Il peut être déposé sur ladite surface à traiter par vaporisation, par application à l'aide d'une shampoineuse, à l'aide d'un appareil d'injection-extraction de la solution comprenant ledit copolymère, ou en versant simplement la solution de copolymère sur la surface à traiter, avec frottement éventuel à l'aide d'une éponge ou d'une brosse.

Lesdites formulations peuvent contenir de 0,1 à 10, de préférence de 0,1 à 2% en poids de copolymère (C).
Lesdites formulations peuvent éventuellement être diluées avant utilisation.

Ledit copolymère (C) peut être mis en oeuvre selon des quantités, exprimées en matière sèche de l'ordre de 0,01 à 5, de préférence de 0,05 à 3 $g/m^2$ de surface.

Ladite composition peut comprendre en outre d'autres additifs tels que des agents tensio-actifs anioniques, et/ou non-ioniques et/ou amphotères ou zwitterioniques en quantité pouvant aller de 0,1 à 20%, des adjuvants de détergence ("builders") en quantité pouvant aller de 0,5 à 10%, des polymères acryliques en quantité pouvant aller de 0,1 à 10%, des agents anti-salissure, des agents antiredéposition, des parfums ... Ces additifs peuvent être du même type que ceux déjà mentionnés ci-dessus. Elle peut en outre comprendre des solvants alcooliques et des agents de blanchiment comme l'eau oxygénée.

La présente invention a également pour objet les compositions détergentes solides ou liquides comprenant ledit copolymère (C).

Les exemples suivants sont donnés à titre illustratif.

**Exemple 1**

Synthèse d'un copolymère PAS/PAO contenant 1% en poids d'AISNa

*1 - Réalisation d'une solution de sel Jeffamine ED 2003 /Acide adipique*

Dans un erlenmeyer de 1 litre, on pèse 475 g d'eau, 446,07 g (soit 0,1978 mol) de Jeffamine ED 2003 (polyoxyéthylène/polyoxypropylène diamine de. HUNTSMAN) et 28,93 g d'acide adipique (soit 0,1918 mol). On agite le mélange à température ambiante pendant 24 heures. Après complète dissolution, on prélève deux échantillons, de 2g chacun, de la solution. On ajoute 48 g d'eau puis on dose le mélange par potentiométrie avec une solution à 10% p/p d'acide acétique.

On ajoute de l'acide adipique en quantité nécessaire pour atteindre le point de neutralisation de la solution (ici 1,332 g soit 9,12 mmol) ; la solution est encore laissée sous agitation pendant 24 heures. La dissolution terminée, deux échantillons sont de nouveau prélevés. On obtient une solution stoechiométrique, de composition pondérale suivante :

Jeffamine ED 2003 : 46,88 % en poids
Acide adipique : 3,18 % en poids
eau : 49,94 % en poids

*2 - Réalisation d'une solution de sel de Jeffamine ED 2003 /AlSNa*

Dans un erlen de 1 litre, on pèse 110 g d'eau, 98,26 g de Jeffamine ED 2003 (soit 0,0435 mol) et 11,74 g (soit 0,0438 mol), de Na sulfo-5-isophtalic acid (AlSNa). On agite le mélange à température ambiante pendant 24 heures. Après complète dissolution, on prélève deux échantillons, de 2g chacun, de la solution. On ajoute 48 g d'eau puis on dose le mélange par potentiométrie avec une solution à 10% p/p d'AlSNa . La quantité d'AlSNa nécessaire pour neutraliser la solution est mesurée pour chaque prise d'échantillon. Après ajout de la quantité d'AlSNa nécessaire pour atteindre le point de neutralisation de la solution (ici 0,116 g soit 0,435 mmol), la solution est laissée encore 24 heures sous agitation . Le même dosage par potentiométrie est réalisé afin de savoir si le point de neutralisation est atteint. On obtient une solution stoechiométrique, de composition pondérale suivante :

Jeffamine ED 2003 : 44,64 % en poids
AlSNa : 5,39 % en poids
eau : 49,97 % en poids

*3 - Synthèse du copolymère PAS/POA contenant 1% en poids AlSNa - Copolymère 1.3*

Dans un réacteur de 500 ml en verre équipé d'un agitateur ancre métallique, on introduit 90 g de la solution de sel Jeffamine ED 2003 / Acide adipique précédemmment préparée, 15 g de la solution de sel Jeffamine ED 2003 / AlSNa précédemment préparée et 22,52 g de caprolactame (soit 0,199 mol) et 0,075 g de catalyseur (solution d'acide hypophosphoreux à 50 % en poids).
Le réacteur est ensuite fermé puis 3 purges vide/argon sont réalisées pour éliminer l'oxygène. Le réacteur est ensuite immergé dans un bain porté à 130°C et on augmente la température selon une programmation définie. La température atteint ainsi 260°C en 3 heures pendant lesquelles de l'eau distille. Un palier à pression atmosphèrique pendant une heure puis un autre à pression réduite pendant 2 heures sont appliqués.
Après ces paliers, la masse réactionnelle est remise sous pression atmosphèrique puis refroidie. Elle est ensuite extraite du réacteur.
Le copolymère est analysé en terme de groupements terminaux ($NH_2$ et COOH) et de masse moléculaire.

*4 - Post-condensation du copolymère PAS/POA contenant 1.1% en poids AlSNa avec de l'anydride succinique - Copolymère 1.4*

La teneur en groupements $NH_2$ ayant été mesurée, la quantité d'anhydride à ajouter est calculée en considérant qu'une fonction $NH_2$ réagit avec un cycle anhydride.
Dans le réacteur en verre, on introduit 30 g de copolymère et 0,135 g d'anhydride succinique (soit 0,001 mol), on purge par trois fois le réacteur pour en éliminer l'oxygène.
Ensuite, on porte la masse réactionnelle sous vide à 200 °C pendant 2 heures. Ensuite, la masse réactionnelle est remise sous pression atmosphèrique puis refroidie.
Elle est ensuite extraite du réacteur.
Le copolymère est analysé en terme de groupements terminaux ($NH_2$ et COOH).

| copolymère | groupements -COOH | groupements -$NH_2$ | masse moléculaire Mn (en équivalents polystyrène) | masse moléculaire Mw (en équivalents polystyrène) |
|---|---|---|---|---|
| 1.3 | 51 | 47 | 22800 | 46 120 |
| 1.4 | 62 | 26 | - | - |

**Exemple 2**

Synthèse d'un copolymère PAS/PAO contenant 4% en poids d'AISNa

*1 - Réalisation d'une solution de sel Jeffamine ED 2003 / Acide adipique*

Dans un erlenmeyer de 1 litre, on pèse 475 g d'eau, 446,07 g (soit 0,1978 mol) de Jeffamine ED 2003 et 28,93 g d'acide adipique (soit 0,1918 mol). On agite le mélange à température ambiante pendant 24 heures. Après complète dissolution, on prélève deux échantillons, de 2g chacun, de la solution. On ajoute 48 g d'eau puis on dose le mélange par potentiométrie avec une solution à 10% p/p d'acide acétique.
On ajoute de l'acide adipique en quantité nécessaire pour atteindre le point de neutralisation de la solution (ici 1,332 g soit 9,12 mmol) ; la solution est encore laissée sous agitation pendant 24 heures. La dissolution terminée, deux échantillons sont de nouveau prélevés. On obtient une solution stoechiométrique, de composition pondérale suivante :

Jeffamine ED 2003 : 46,88 % en poids
Acide adipique : 3,18 % en poids
eau : 49,94 % en poids

*2 - Réalisation d'une solution de sel de Jeffamine ED 2003 / AISNa*

Dans un erlen de 1 litre, on pèse 110 g d'eau, 98,26 g de Jeffamine ED 2003 (soit 0,0435 mol) et 11,74 g (soit 0,0438 mol), de Na sulfo-5-isophtalic acid (AISNa). On agite le mélange à température ambiante pendant 24 heures. Après complète dissolution, on prélève deux échantillons, de 2g chacun, de la solution. On ajoute 48 g d'eau puis on dose le mélange par potentiométrie avec une solution à 10% p/p d'AISNa . La quantité d'AISNa nécéssaire pour neutraliser la solution est mesurée pour chaque prise d'échantillon. Après ajout de la quantité d'AISNa nécessaire pour atteindre le point de neutralisation de la solution (ici 0,116 g soit 0,435 mmol), la solution est laissée encore 24 heures sous agitation . Le même dosage par potentiométrie est réalisé afin de savoir si le point de neutralisation est atteint. On obtient une solution stoechiométrique, de composition pondérale suivante :

Jeffamine ED 2003 : 44,64 % en poids
AISNa : 5,39 % en poids
eau : 49,97 % en poids

*3 - Synthèse du copolymère PASIPOA contenant 4% en poids AISNa - Copolymère 2.3*

Dans un réacteur de 500 ml en verre équipé d'un agitateur ancre métallique, on introduit 54 g de la solution de sel Jeffamine ED 2003 / Acide adipique précédemmment préparée, 57 g de la solution de sel Jeffamine ED 2003 / AISNa précédemmment préparée et 21,75 g de caprolactame (soit 0,192 mol) et 0,077 g de catalyseur (solution d'acide hypophosphoreux à 50 % en poids).
Le réacteur est ensuite fermé puis 3 purges vide/argon sont réalisées pour éliminer l'oxygène. Le réacteur est ensuite immergé dans un bain porté à 130°C et on augmente la température selon une programmation définie. La température atteint ainsi 260°C en 3 heures pendant lesquelles de l'eau distille. Un palier à pression atmosphèrique pendant une heure puis un autre à pression réduite pendant 2 heures sont appliqués.
Après ces paliers, la masse réactionnelle est remise sous pression atmosphèrique puis refroidie. Elle est ensuite extraite du réacteur.
Le copolymère est analysé en terme de groupements terminaux (NH2 et COOH) et de masse moléculaire.

*4 - Post-condensation du copolymère PAS/POA contenant 4% en poids AISNa avec de l'anydride succinique - Copolymère 2.4*

La teneur en groupements NH2 ayant été mesurée, la quantité d'anhydride à ajouter est calculée en considérant qu'un fonction NH2 réagit avec un cycle anhydride.
Dans le réacteur en verre, on introduit 30 g de copolymère et 0,3835 g d'anhydride succinique (soit 0,0014 mol), on purge par trois fois le réacteur pour en éliminer l'oxygène. Ensuite, on porte la masse réactionnelle sous vide à 200 °C pendant 2 heures.
Ensuite, la masse réactionnelle est remise sous pression atmosphèrique puis refroidie.
Elle est ensuite extraite du réacteur.
Le copolymère est analysé en terme de groupements terminaux (NH2 et COOH).

| copolymère | groupements -COOH | groupements -NH$_2$ | masse moléculaire Mn (en équivalents polystyrène) | masse moléculaire Mw (en équivalents polystyrène) |
|---|---|---|---|---|
| 2.3 | 120 | 128 | 20180 | 38 190 |
| 2.4 | 140 | 73 | - | - |

**Exemple 3**

Synthèse d'un copolymère PAS/PAO contenant 2% en poids d'AISNa

*1 - Réalisation d'une solution de sel Jeffamine ED 2003 /Acide adipique*

Dans un erlenmeyer de 1 litre, on pèse 425 g d'eau, 399,63 g (soit 0,1772 mol) de Jeffamine ED 2003 et 25,365 g d'acide adipique (soit 0,1737 mol). On agite le mélange à température ambiante pendant 24 heures. Après complète dissolution, on prélève deux échantillons, de 2g chacun, de la solutio. On ajoute 48 g d'eau puis on dose le mélange par potentiométrie avec une solution à 10% p/p d'acide acétique.

On ajoute de l'acide adipique en quantité nécessaire pour atteindre le point de neutralisation de la solution (ici 0,536 g soit 3,67 mmol) ; la solution est encore laissée sous agitation pendant 24 heures. La dissolution terminée, deux échantillons sont de nouveau prélevés. On obtient une solution stoechiométrique, de composition pondérale suivante :

Jeffamine ED 2003 : 46,986 % en poids
Acide adipique : 3,046 % en poids
eau : 49,968 % en poids

*2 - Réalisation d'une solution de sel de Jeffamine ED 2003 /AISNa*

Dans un erlen de 1 litre, on pèse 200 g d'eau, 89,33 g de Jeffamine ED 2003 (soit 0,0396 mol) et 10,67 g (soit 0,0398 mol), de Na sulfo-5-isophtalic acid (AISNa). On agite le mélange à température ambiante pendant 24 heures. Après complète dissolution, on prélève deux échantillons, de 2g chacun, de la solution. On ajoute 48 g d'eau puis on dose le mélange par potentiométrie avec une solution à 10% p/p d'AISNa . La quantité d'AISNa nécéssaire pour neutraliser la solution est mesurée pour chaque prise d'échantillon. La solution est parfaitement neutralisée ; l'ajout d'AISNa n'est pas nécessaire.

On obtient une solution stoechiométrique, de composition pondérale suivante :

Jeffamine ED 2003 : 44,6665 % en poids
AISNa : 5,335 % en poids
eau : 50 % en poids

*3 - Synthèse du copolymère PAS/POA contenant 2% en poids AISNa - Copolymère 3.3*

Dans un réacteur de 500 ml en verre équipé d'un agitateur ancre métallique, on introduit 233 g de la solution de sel Jeffamine ED 2003 1 Acide adipique précédemmment préparée, 87,4 g de la solution de sel Jeffamine ED 2003 / AISNa précédemmment préparée et 63,65 g de caprolactame (soit 0,563 mol) et 0,2374 g de catalyseur (solution d'acide hypophosphoreux à 50 % en poids).

Le réacteur est ensuite fermé puis 3 purges vide/argon sont réalisées pour éliminer l'oxygène. Le réacteur est ensuite immergé dans un bain porté à 130°C et on augmente la température selon une programmation définie. La température atteint ainsi 260°C en 3 heures pendant lesquelles de l'eau distille. Un palier à pression atmosphèrique pendant une heure puis un autre à pression réduite pendant 2 heures sont appliqués.

Après ces paliers, la masse réactionnelle est remise sous pression atmosphèrique puis refroidie. Elle est ensuite extraite du réacteur.

Le copolymère est analysé en terme de groupements terminaux (NH2 et COOH) et de masse moléculaire.

*4 - Post-condensation du copolymère PAS/POA contenant 2% en poids AlSNa avec de l'anydride succinique - Copolymère 3.4*

La teneur en groupements NH2 ayant été mesurée, la quantité d'anhydride à ajouter est calculée en considérant qu'un fonction NH2 réagit avec un cycle anhydride.

Dans le réacteur en verre, on introduit 196,4 g de copolymère et 3,34 g d'anhydride succinique (soit 0,033 mol), on purge par trois fois le réacteur pour en éliminer l'oxygène.

Ensuite, on porte la masse réactionnelle sous vide à 200 °C pendant 1 heure, puis à 250°C pendant 2 heures.

Ensuite, la masse réactionnelle est remise sous pression atmosphèrique puis refroidie. Elle est ensuite extraite du réacteur.

Le copolymère est analysé en terme de groupements terminaux (NH2 et COOH).

| copolymère | groupements -COOH | groupements -NH$_2$ | masse moléculaire Mn (en équivalents polystyrène) | masse moléculaire Mw (en équivalents polystyrène) |
|---|---|---|---|---|
| 3.3 | 81 | 84 | 20 800 | 41 500 |
| 3.4 | 108 | 45 | - | - |

Les copolymères des exemples 1 à 3 sont testés quant à leurs propriétés d'hydrophilisation, d'agent de résistance aux taches et d'agent permettant de faciliter l'enlèvement des taches.

**HYDROPHILISATION**

Préparation de l'échantillon à tester

Un film de Polyamide PA 6.6 présentant une surface de 70 cm$^2$ est introduit dans un bain d'éthanol et nettoyé à température ambiante sous ultrasons pendant 30 minutes, puis rincé à l'eau déminéralisée et chauffé pendant 2 heures dans de l'eau déminéralisée bouillante, ce afin d'éliminer les traces éventuelles d'oligomères du film.

Le film conditionné ainsi obtenu est immergé à température ambiante dans un volume de 200 ml d'une solution aqueuse contenant 2,5 g/l de copolymère à tester, pendant 2 heures sous agitation, puis rincé deux fois pendant 10 minutes à l'eau déminéralisée sous agitation, et laissé séché à l'air à une humidité relative de 80% pendant 7 jours.

Ce protocole permet d'obtenir une surface de film et une adsorption reproductibles. Seules les éventuelles chaînes de copolymère en interaction directe avec le film de PA sont laissées à la surface.

Une surface témoin est réalisée en suivant le même protocole mais en immergeant le film de PA dans une solution d'eau déminéralisée ne contenant pas de polymère.

On entendra donc ci-après par "surface témoin", le film de PA débarassé de ses oligomères, puis immergé dans de l'eau déminéralisée et laissé sécher.

Méthode de mesure de mouillage

Le film de PA testé a été traité à l'aide du copolymère 3.4 de l'exemple 3.

Les propriétés de surface du film traité sont déterminées par mesure de mouillage en géométrie double liquide. Le film traité est immergé dans une cuve en verre (2 cm x 5 cm x 3 cm) remplie d'huile de synthèse (huile Carrefour 20 W 50, de viscosité $\eta$ = 320 mPa.s et de tension de surface $\gamma$ = 32,2 mN/m). Une goutte d'eau déminéralisée (volume 1$\mu$l) est déposée à la surface du support. L'angle à l'équilibre $\theta$ qui caractérise le mouillage est gouverné par l'énergie de surface du substrat et les tensions superficielles des liquides en présence ; il est mesuré au bout de 20 minutes. Plus l'hydrophilisation apportée par le copolymère est importante, plus $\theta$ est faible.

Les résultats obtenus sont les suivants

| copolymère de l'exemple | $\theta$ en ° |
|---|---|
| 3.4 | 88 |
| surface témoin | 135 |

**RESISTANCE AUX TACHES ("STAIN RESISTANCE")**

Préparation de l'échantillon à tester

Un film de Polyamide PA 6.6 présentant une surface de 50 cm$^2$ est introduit dans un bain d'éthanol et nettoyé à température ambiante sous ultrasons pendant 30 minutes, puis rincé à l'eau déminéralisée et chauffé pendant 2 heures dans de l'eau déminéralisée bouillante, ce afin d'éliminer les traces éventuelles d'oligomères du film.

Le film conditionné ainsi obtenu est immergé à température ambiante dans un volume de 250 ml d'une solution aqueuse contenant 2,5 g/l de copolymère à tester, pendant 2 heures sous agitation, puis rincé deux fois pendant 10 minutes à l'eau déminéralisée sous agitation, et laissé séché à l'air à une humidité relative de 80% pendant 7 jours.

Ce protocole permet d'obtenir une surface de film et une adsorption reproductibles. Seules les éventuelles chaînes de copolymère en interaction directe avec le film de PA sont laissées à la surface.

Une surface témoin est réalisée en suivant le même protocole mais en immergeant le film de PA dans une solution d'eau déminéralisée ne contenant pas de polymère.

On entendra donc ci-après par "surface témoin", le film de PA débarassé de ses oligomères, puis immergé dans de l'eau déminéralisée et laissé sécher.

Test de coloration par le café (résistance aux taches - "stain resistance"-)

Le film de PA (50 cm$^2$) testé a été traité comme ci-dessus décrit dans un volume de 250 ml de solution à 2,5g/l des copolymères 1.3 , 1.4 , 2.3 , 2.4 , 3.3 et 3.4 des exemples 1 à 3.

Le film de PA traité est immergé pendant 30 minutes dans du café (50 ml de solution aqueuse à 2% de Nescafé Expresso de Nestlé) à température ambiante, puis séché.

Sa coloration DE est ensuite mesurée par un chromamètre (Minolta CR-300 de Minolta) suivant les 3 axes L, a, b, par rapport à un film de PA " blanc " (surface témoin n'ayant pas été immergée dans du café):

$$DE_{échantillon} = \sqrt{DL^2 + Da^2 + Db^2}$$

avec DL = $L_{échantillon}$ - $L_{blanc}$

Da = $a_{échantillon}$ - $a_{blanc}$

Db = $b_{échantillon}$ - $b_{blanc}$

La coloration de l'échantillon est ensuite normalisée par rapport à un film témoin (surface témoin) ayant subi la même immersion dans le café ; la coloration normalisée est égale au rapport R = $DE_{échantillon}$ / $DE_{témoin}$.

Lorsque ce rapport R est inférieur à 1, cela signifie que l'échantillon traité se colore moins que le témoin

Les résultats obtenus sont les suivants :

| copolymère de l'exemple | taux de -COOH en meq /kg | taux de -NH$_2$ en meq./kg | % AlSNa (% SO$_3^-$) | R |
|---|---|---|---|---|
| 1.3 | 51 | 47 | 1 (0,298) | 1,21 |
| 1.4 | 62 | 26 | 1 (0,298) | 1,03 |
| 2.3 | 120 | 128 | 4 (1,192) | 1,01 |
| 2.4 | 140 | 73 | 4 (1,192) | 0,87 |
| 3.3 | 81 | 84 | 2 (0,596) | 1,06 |
| 3.4 | 108 | 45 | 2 (0,596) | 0,91 |

**ENLEVEMENT DE LA SALISSURE ("SOIL RELEASE")**

- Prétraitement des moquettes -

Les solutions aqueuses de copolymère de traitement sont appliquées sur des pièces de moquette tuftée beige Sommer (référence New Neptune coloris J480, à velours 100 % polyamide, 1840 g/m$^2$) par pulvérisation, de manière à obtenir un dépôt de copolymère (exprimé en sec) de 0.05, 0.1 ou 0.5 partie en poids pour 100 parties en poids de velours. On pulvérise 100 ml de solution de copolymère pour 100g de velours, la masse surfacique de la moquette "utile" (velours) est évaluée à 600 g/m$^2$ . Une pièce de moquette non traitée sert de témoin.

- Test de tachage-détachage -

La méthode consiste à réaliser des taches diverses sur les pièces de moquette traitées à l'aide d'une solution de copolymère 3.4 et à procéder à leur détachage avec le produit de nettoyage selon les consignes données par le fournisseur.
Les pièces de moquette sont tachées avec les 4 produits tachants suivants :

| - Café | de marque Carte noire Maxpax | 10 gouttes |
|---|---|---|
| - Cirage | Shoe polish Kiwi de Kiwi | Frottement avec dépôt d'une petite quantité |
| - Stylo-bille | Noir de marque Bic | 5 traits |
| - Rouge à lèvres | Rouge grenat profond 03 de Gemey | 1 trait |

Les pièces de moquette tachées sont laissées 24 heures puis détachées selon le protocole suivant.

*- Produit de nettoyage ayant servi pour l'enlèvement des taches :*

K2r (de K2r Produkte AG) nettoyant spécial en bombe

*- Méthode de détachage :*

1) Absorption de l'excès de liquide à l'aide d'un matériau non-tissé absorbant ou élimination par raclage ou grattage à la spatule de produits visqueux ou solides s'effritant.
2) Utilisation du détachant selon les indications du fabricant :

- pulvérisation de la mousse
- pénétration de la mousse à l'aide d'une brosse et d'un non-tissé absorbant puis peignage du velours

ce jusqu'à élimination totale de la tache ou impression de ne plus rien enlever (aucune trace sur le matériau non-tissé).
3) Séchage maximal avec le matériau non-tissé absorbant
4) Peignage du velours
5) Aspiration
6) Cotation

L'enlèvement des taches est côté par 5 personnes selon l'échelle suivante :

0 : pas d'enlèvement
1 : enlèvement faible
2 : enlèvement important
3 : enlèvement presque complet
4 : enlèvement total

On peut mettre des demi-points. Le résultat fourni est la moyenne de ces 5 notations. Un écart de 0.5 est considéré comme significatif

Les résultats obtenus sont les suivants :

| % en poids de copolymère déposé (copolymère/velours) | café | cirage | stylo-bille | rouge à lèvres |
|---|---|---|---|---|
| 0 (témoin non traité) | 1,7 | 2,3 | 2,8 | 1,7 |
| 0.05% de copolymère 3.4 | 2,3 | 3,4 | 3,9 | 3,0 |

On constate que le prétraitement par le copolymère à faible concentration procure un meilleur enlèvement (soil release) des taches grasses et de café.

- Test d'encrassement-nettoyage -

Les opérations suivantes sont mises successivement en oeuvre : traitement des pièces de moquette comme indiqué précédemment, encrassement, aspiration, nettoyage, avec mesures photométriques et calcul de l'enlèvement de la salissure.

*Préparation des échantillons*

On découpe, trois échantillons de pièces de moquette (180 mm x 200 mm) pré-traitées à l'aide d'une solution du copolymère 3.4 de l'exemple 3

*Encrassement des échantillons " au tonneau "*

On encrasse des cubes de mousse, dans un agitateur en grès rotatif, avec une suspension de poussière normalisée dans du perchoréthylène. On encrasse les échantillons en les fixant sur la paroi intérieure d'un tonneau cylindrique qui est mis en rotation et dans lequel ont été placés les cubes de mousse salis et séchés, des billes de porcelaine et un tétrapode. Ces échantillons salis sont photométrés.

*Aspiration*

On procède à l'aspiration des échantillons salis à l'aide d'un aspirateur prévu à cet effet.

*Injection-Extraction*

On réalise l'injection-extraction des échantillons prétraités en les fixant dans les trois alvéoles d'une plaque prévue à cet effet, et en utilisant une machine à injection-extraction avec une solution du produit de nettoyage.
Produit utilisé : Wetrok Retex (détergent faible de Wetrok))
Les échantillons sont ensuite séchés à l'air libre puis aspirés et photométrés.

*Calculs*

Les mesures photométriques des valeurs de réflectance sont effectuées avec un spectrophotomètre Datacolor Elrepho 2000, sous une longueur d'onde de 680 mm, sans UV, spot réglé sur 27.
On procède sur chaque échantillon à quatre mesures, desquelles est extraite la moyenne.
On obtient les valeurs suivantes :

- ♦ Echantillons neufs (non prétraités): Yo
- ♦ Echantillons prétraités et salis : Y1
- ♦ Echantillons prétraités, salis et nettoyés : Y3

Le pourcentage d'élimination de la salissure est alors égal à $R' = \dfrac{Y_3 - Y_1}{Y_0 - Y_1} \times 100$

Les résultats obtenus sont les suivants :

| % en poids de copolymère déposé (copolymère 3.4 /velours) | R en % |
|---|---|
| 0 (témoin non traité) | 39% |
| 0,1% | 62% |

(suite)

| % en poids de copolymère déposé (copolymère 3.4 /velours) | R en % |
|---|---|
| 0,5% | 63% |

On constate que le prétraitement des moquettes en polyamide permet un meilleur enlèvement de la salissure (soil release) au nettoyage par un détergent, et qu'une faible quantité (0,1%) de copolymère est suffisante.

**DETERGENCE**

- <u>Matériaux</u> -

.    moquette en fibre de polyamide, de couleur blanc cassé
.    source des taches

*    huile de moteur usagée
*    rouge à lèvre (rouge vif de Revlon)
*    sauce spaghetti "Old World"
*    cirage noir "Kiwi" pout chaussure
*    thé
*    café

.    balance analytique
.    micropipette
.    éponge d'application
.    serviette en papier blanc
.    chronomètre
.    aspirateur "Dirt Devil"
.    nettoyeur à la vapeur "Bissel"
.    concentré pour nettoyage à la vapeur "Rug Doctor"

- <u>Préparation des moquettes</u> -

1) la moquette est tout d'abord nettoyée d'un côté à l'autre, devant et derrière, à l'aide du détergent Rug Color dilué selon les indications de la marque (2 oz. par galon, soit environ 15g/l), en utilisant un appareil de nettoyage à vapeur Bissel.
2) après séchage, la moquette est découpée en carrés de 4"x4" (environ 10x10cm$^2$) qui sont marqués en dessous pour s'assurer que tous les poils sont orientés dans la même direction d'un carré à l'autre pour obtenir des caractéristiques d'apparence similaire (moindre réflexion).
3) les échantillons de moquette sont ensuite marqués pour indiquer les essais et les produits.

- <u>Test de tachage-nettoyage</u> -

1) on effectue deux essais pour chaque tache. La réflectance avant tachage, Rd1, des échantillons de moquette est mesurée.
2) on réalise les taches d'huile en utilisant la micro-pipette ; les taches cireuses sont d'abord pesées sur l'éponge d'application et ensuite appliquées sur les échantillons de moquette.
Les taches d'huile sont appliquées à la dose de 0,12 ± 0,05g pour chaque échantillon de moquette à l'intérieur d'un masque carré de 2"x2" (environ 5x5 cm$^2$) à l'aide d'une spatule. Les cires sont appliquées à une dose pondérale de 0,15 ± 0,05 g.
3) on laisse les taches sécher pendant la nuit avant le nettoyage. On mesure la réflectance des échantillons de moquettes tachées, Rd2, avant nettoyage.

4) en suivant les recommandations données sur l'étiquette que porte la moquette, les échantillons sont séchés quatre fois (chaque fois pendant 5 secondes), en utilisant les serviettes en papier absorbant blanc.

5) les échantillons sont ensuite traités par vaporisation à une distance de 4-6" (environ 10-15 cm), de 4,0 ± 0,1 g du produit de nettoyage liquide aqueux suivant

- . sodium lauryl sulfate 2 %
- . sodium polyacrylate 1%
- . propylène glycol 3%
- . parfum 0,05 %
- . eau qsp 100%

de pH 9, additionné de 0,25% à 1% de son poids de copolymère sulfoné préparé ci-dessus

6) on laisse reposer le produit pour permettre à la mousse formée de pénétrer dans les taches.

7) en utilisant une serviette sèche en papier blanc absorbant, on nettoie les taches en frottant cinq fois du sommet de la tache à travers le centre ; on tourne la serviette en papier pour obtenir une surface propre et on frotte encore cinq fois du bas de la tache à travers le centre.

8) on répète les étapes 5) à 7) quatre fois supplémentaires pour chaque échantillon, pour un total de 5 cycles de nettoyage.

9) on sèche les moquettes puis on aspire. On mesure alors le réflectance Rd3 des échantillons de moquette nettoyées.

L'enlèvement des taches (soil removal) R" est calculé comme suit :

$$R" = \frac{Rd2\text{-}Rd3}{Rd2\text{-}Rd1} \times 100$$

Les résultats obtenus (valeurs de R" en %) sont les suivants
(mesures photométriques des valeurs de réflectance effectuées avec un spectrophotomètre Datacolor Elrepho 2000, sous une longueur d'onde de 680 mm, sans UV, spot réglé sur 27)

| formulation | rouge à lèvre | huile de vidange | café | thé | sauce spaghetti |
|---|---|---|---|---|---|
| standard | 17,35 | 34,24 | 87,8 | 85,14 | 51,47 |
| standard + 0,5 % de copolymère 3.4 | 49 | 69,9 | 100 | 90 | 63,29 |
| standard + 1% de copolymère 3.4 | 61,22 | 87,1 | 100 | 97,07 | 73,5 |

## Revendications

1. Copolymère (C) hydrosoluble ou hydrodispersable comprenant

- au moins une unité polyoxyalkylène (POA) comprenant de 2 à 200, de préférence de 5 à 150 motifs oxyalkylène semblables ou différents, dont le reste alkylène linéaire ou ramifié contient de 2 à 12, de préférence de 2 à 6 atomes de carbone, tout particulièrement 2 ou 3 atomes de carbone
- et au moins une unité polyamide sulfonée (PAS) ledit copolymère (C) étant **caractérisé en ce que**

   - ladite unité polyamide sulfonée (PAS) comprend.

      (i) des motifs polyfonctionnels non sulfonés (mNS) semblables ou différents de formule (mNS$^1$) et/ou (mNS$^2$)

         -C(O)-A-C(O)-N(R)-D-N(R)-       (mNS$^1$) (dicarbonyle/diimino)

      et/ou

$$-C(O)-K-N(R)- \qquad (mNS^2) \text{ ("lactame")}$$

et/ou

$$-C(O)-K-N(R)-C(O)-A-C(O)- \qquad (mNS^3) \text{ ("lactame"/dicarbonyle)}$$

et/ou

$$-N(R)-D-N(R)-C(O)-K-N(R)- \qquad (mNS^4) \text{ (diimino/"lactame")}$$

formules dans lesquelles

- A représente un groupe hydrocarboné aliphatique, cycloaliphatique ou aromatique
- D représente un groupe hydrocarboné aliphatique, cycloaliphatique ou aromatique éventuellement interrompu par un ou plusieurs hétéroatomes d'oxygène ou d'azote tertiaire
- K représente un groupe aliphatique, cycloaliphatique ou aromatique
- les symboles R sont identiques ou différents et représentent un atome d'hydrogène ou un groupe alkyle en $C_1$-$C_4$

(ii) des motifs polyfonctionnels sulfonés (mS) semblables ou différents de formule

$$-V-Q(L-SO_3M)_n-W-$$

où

- les symboles V et W, identiques ou différents, représentent un groupe

    . carbonyle -C(O)-
    . oxy -O-
    . imino -NH-
    . ou (R)imino -N(R)- où R représente un groupe alkyle en $C_1$-$C_4$

- le symbole Q représente un groupe hydrocarboné aromatique, aliphatique ou cycloaliphatique
- L est un lien valentiel ou un groupe alkylène, alcoxyalkylène, oxyalkylène, arylène, alkylarylène, alcoxyarylène
- M représente un atome d'hydrogène ou un cation alcalin
- n est supérieur ou égal à 1

(iii) et des groupes liants (gIPAS) des motifs de ladite unité polyamide sulfonée (PAS)
-C(O)-O- et/ou -O-C(O)- et/ou -C(O)-N(R)- et/ou -N(R)-C(O)- où R, semblable ou différent, représente un atome d'hydrogène ou un groupe alkyle en $C_1$-$C_4$

* le taux de fonctions $SO_3M$, exprimé en masse de fonction $SO_3$-, dans ladite ou lesdites unités (PAS) est tel qu'il représente au moins 0,1%, dé préférence au moins 0,2%, tout particulièrement au moins 0,4%, notamment de 0,4 à 15% de la masse totale de copolymère (C)
* le rapport masse de l'ensemble des unités (POA) / masse de l'ensemble des unités (PAS) est de 95/5 à 30/70, de préférence de 90/10 à 40/60, tout particulièrement de 85/15 à 50/50
* le nombre de fonctions amino -$NH_2$ présentes dans ledit copolymère (C) est d'au plus 80 milliéquivalents par kilogramme de copolymère (C)
* le nombre de fonctions carboxy -COOH présents dans ledit copolymère (C) est d'au moins d'au moins 80 milliéquivalents, de préférence d'au moins 100 milliéquivalents par kilogramme de copolymère (C).

2. Copolymère (C) selon la revendication 1), **caractérisé en ce qu'**il présente une masse moléculaire en nombre inférieure ou égale à 100 000, de préférence inférieure ou égale à 70 000, tout particulièrement de 5 000 à 60 000.

**3.** Copolymère (C) selon la revendication 1) ou 2), **caractérisé en ce qu'**il est linéaire séquencé.

**4.** Copolymère (C) selon la revendication 3), **caractérisé en ce que** le rapport nombre de motifs (POA) / nombre de motifs (PAS) est de 1/2 à 2/1.

**5.** Copolymère (C) selon l'une quelconque des revendications 1) à 4), **caractérisé en ce qu'**il comprend en outre dans son ou ses unité(s) polyamide(s) (PAS) des motifs polyfonctionnels autres, partiarlièrement :

 * des motifs dicarbonyles non sulfonés de formule -C(O)-A-C(O)- , où A représente un groupe hydrocarboné aliphatique, cydoaliphatique ou aromatique, semblables ou non au sous-motif dicarbonyle du motif (mNS$^1$) ou (mNS$^3$), non liés à un sous-motif diimino-N(R)-D-N(R)- ou à un sous-motif "lactame" -C(O)-K-N(R)-
 * et/ou des motifs polyfonctionnels non sulfonés de formule (i)

$$(i) \ -X-E-Y-$$

 où

 . les symboles X et Y, identiques ou différents, représentent un groupe

   . oxy -O-
   . imino -NH-
   . ou (R)imino -N(R)- où R représente un groupe alkyle en $C_1$-$C_4$

 . le symbole E représente un groupe hydrocarboné aliphatique, cycloaliphatique ou aromatique, polyvalent, éventuellement interrompu par un ou plusieurs hétéroatome(s) d'oxygène ou d'azote tertiaire, ledit groupe polyvalent étant lié à au moins un groupe X et à au moins un groupe Y,
       ou

$$(ii) \ -C(O)-E'-C(O)-$$

 où
 . le symbole E' représente un groupe hydrocarboné aliphatique, cycloaliphatique ou aromatique substitué par au moins une fonction hydroxy ou carboxy

**6.** Copolymère (C) selon l'une quelconque des revendications 1) à 5), **caractérisé en ce que** l'unité (PAS) comprend des motifs correspondant aux polyamides aliphatiques PA 4, PA 6, PA 10, PA 11, PA 12, PA 6.6, PA 4.6, PA 10.6 et contenant en outre des motifs sulfonés, de préférence dicarbonytes sulfonés, sulfosuccinoyle ou sulfoisophtaloyle tout particulièrement, tout ou partie des motifs dicarbonyles aliphatiques non sulfonés pouvant être remplacée par des motifs dicarbonyles aromatiques.

**7.** Copolymère (C) selon l'une quelconque des revendications 1) à 6), **caractérisé en ce que** chaque unité polyoxyalkylène (POA) est liée à une unité polyamide sulfonée (PAS) par l'intermédiaire de groupes liants semblables ou différents comprenant au moins un hétéroatome N, O , S , de préférence par l'intermédiaire de groupes amides, esters, carbamates, oxy, ureylène ou thio.

**8.** Procédé de préparation du copolymère (C) faisant l'objet de rune quelconque des revendications 1) à 7), par polycondensation des monomères (M) dont dérive l'unité (PAS) en présence d'un prépolymère (PP) contenant l'unité polyoxyalkylène (POA) et portant des motifs ou fonctions susceptibles de se condenser ou réagir avec au moins un desdits monomères, et éventuellement postréaction avec un agent consommateur de fonctions amino -NH$_2$.

**9.** Procédé selon la revendication 8), **caractérisé en ce que** les monomères (M) sont choisis parmi ceux dont dérivent les polyamides aliphatiques du type PA 4, PA 6, PA 10, PA 11, PA 12, PA 6.6, PA 4.6, PA 10.6 et comprenant en outre des monomères sulfonés, de préférence acides dicarboxyliques sulfonés, tout particulièrement acides sulfosucciniques ou sulfoisophtaliques, tout ou partie des acides dicarboxyliques aliphatiques non sulfonés pouvant être remplacée par des acides dicarboxyliques aromatiques.

**10.** Procédé selon la revendication 8) ou 9), **caractérisé en ce que** le prépolymère (PP) présentant une chaîne polyoxyalkylène (POA) portant des motifs susceptibles de se condenser ou réagir avec au moins un desdits monomères dont dérive le polyamide sulfoné, présente au moins une terminaison alcool, amine, acide, époxy ou uréthane.

**11.** Procédé selon l'une quelconque des revendication 8) à 10), **caractérisé en ce que** l'opération de polycondensation des monomères (M) dont dérive l'unité (PAS) en présence dudit prépolymère (PP) contenant l'unité polyoxyalkylène (POA) peut être réalisée :

- par mise en contact du prépolymère (PP) et des différents monomères (M) sous forme de poudre, sous forme liquide, ou en solution aqueuse,

  * les quantités relatives des différents monomères (M) étant telles que le rapport molaire nombre de leurs fonctions carboxyliques / nombre de leurs fonctions amines soit d'au moins 1, de préférence d'au moins 1,05, tout particulièrement d'au moins 1,1
  * la quantité de monomère sulfoné, exprimée en masse de $SO_3$ , est telle qu'elle représente au moins 0.1% , de préférence au moins 0,2%, tout particulièrement au moins 0,4% , notamment de 0,4 à 15% de la masse totale de monomères (M) et prépolymère (PP) mise en oeuvre
  * les quantités relatives de prépolymère (PP) et de monomères (M) étant telles que le rapport masse du prépolymère (PP) / masse de l'ensemble des monomères (M) est de 95/5 à 30/70, de préférence de 90/10 à 40/60, tout particulièrement de 85/15 à 50/50

- puis polycondensation proprement dite sous atmosphère inerte, à une température de l'ordre de 190 à 280 °C, de préférence de l'ordre de 220 à 270°C, avec distillation de l'eau formée
- et éventuellement postcondensation ou post réaction du copolymère formé avec un composé consommateur de fonctions amino -$NH_2$, en quantité telle que la quantité de fonctions -$NH_2$ éventuellement présentes dans le copolymère final ne représente pas plus de 80 milliéquivalents par kilogramme de copolymère final.

**12.** Procédé selon la revendication 11), **caractérisé en ce que** ledit composé susceptible de consommer les fonctions amino -$NH_2$ est un

- acide carboxylique, de préférence l'acide succinique, l'acide isophtalique sulfonate de sodium
- anhydride carboxylique, de préférence l'anhydride succinique, l'anhydride phtalique, l'anhydride maléique
- époxyde mono ou poly fonctionnel, de préférence un époxyalcane contenant de 4 à 18 atomes de carbone
- monoisocyanate, de préférence l'isocyanate de dodécane
- acrylate ou méthacrylate quaternaire

**13.** Procédé selon la revendication 12), **caractérisé en ce que** ledit composé susceptible de consommer les fonctions amino -$NH_2$ est mis en oeuvre selon une quantité telle que la quantité de fonctions -$NH_2$ éventuellement présentes dans le copolymère final ne représente pas plus de 80 milliéquivalents par kilogramme de copolymère final.

**14.** Utilisation du copolymère (C) hydrosoluble ou hydrodispersable faisant l'objet de l'une quelconque des revendications 1) à 7), ou susceptible d'être obtenu selon l'une quelconque des revendications 8) à 13), comme agent détergent des surfaces dures ou textiles, notamment en polymère synthétique, tout particulièrement des surfaces textiles en polyamide, et/ou comme agent susceptible d'apporter auxdites surfaces des propriétés de résistance aux taches et/ou permettant de faciliter l'enlèvement des taches et de la salissure desdites surfaces.

**15.** Procédé pour nettoyer les surfaces dures ou textiles, notamment en polymère synthétique, tout particulièrement les surfaces textiles en polyamide, et/ou pour apporter auxdites surfaces des propriétés de résistance aux taches et/ou pour faciliter l'enlèvement des taches et de la salissure desdites surfaces, par traitement non permanent desdites surfaces à l'aide du copolymère (C) hydrosoluble ou hydrodispersable faisant l'objet de l'une quelconque des revendications 1) à 7), ou susceptible d'être obtenu selon l'une quelconque des revendications 8) à 13), ledit copolymère (C) étant présent en solution ou dispersion aqueuse.

**16.** Utilisation ou procédé selon la revendication 14) ou 15), **caractérisé**(e) en ce que la surface considérée est une paroi de douche.

**17.** Utilisation ou procédé selon la revendication 14) ou 15), **caractérisé**(e) en ce que la surface considérée est du

**EP 1 161 516 B1**

linge, des vêtements ou sous-vêtements, de préférence en polyamide.

**18.** Utilisation ou procédé selon la revendication 14) ou 15), **caractérisé**(e) en ce que la surface considérée est un tapis ou une moquette, de préférence en polyamide.

**19.** Utilisation ou procédé selon la revendication 16) ou 18), **caractérisé**(e) en ce que ledit copolymère (C) est mis en oeuvre à raison de 0,01 à 5, de préférence de 0,05 à 3 g/m$^2$ de surface.

**20.** Compositions détergentes pour le nettoyage des surfaces dures ou textiles, notamment en polymère synthétique, tout particulièrement des surfaces textiles en polyamide, et/ou pour apporter auxdites surfaces des propriétés de résistance aux taches et/ou faciliter l'enlèvement des taches et de la salissure desdites surfaces, **caractérisées en ce qu'**elles comprennent au moins un copolymère (C) hydrosoluble ou hydrodispersable faisant l'objet de l'une quelconque des revendications 1) à 7), ou susceptible d'être obtenu selon l'une quelconque des revendications 8) à 13).

**21.** Compositions détergentes selon la revendication 20), **caractérisées en ce qu'**elles et comprennent de 0,05 à 10, de préférence de 0,1 à 2 % en poids de copolymère (C)

**22.** Compositions détergentes selon la revendication 20) ou 21), **caractérisées en ce qu'**elles sont destinées au rinçage des parois de douche et comprennent de l'eau, un agent chélatant et au moins un agent tensioactif.

**23.** Méthode de nettoyage des parois de douche par humidification de la surface des parois avec de l'eau et pulvérisation sur lesdites parois humides de la composition faisant l'objet de la revendication 22).

**24.** Méthode selon la revendication 23), **caractérisée en ce que** ladite paroi est en porcelaine, en carreaux de céramique, en plexiglass ou en fibres de verre.

**25.** Compositions détergentes selon la revendication 20) ou 21), **caractérisées en ce qu'**elles sont destinées au lavage et/ou rinçage et/ou adoucissage du linge, des vêtements ou sous-vêtements, en polyamide de préférence.

**26.** Compositions détergentes selon la revendicadon 20) ou 21), **caractérisées en ce qu'**elles sont destinées au nettoyage des tapis et moquettes, en polyamide de préférence.

**Patentansprüche**

**1.** Wasserlösliches oder wasserdispergierbares Copolymer (C), welches aufweist

- wenigstens eine Polyoxyalkylengruppierung (POA), welche 2 bis 200, vorzugsweise 5 bis 150 Oxyalkyleneinheiten aufweist, gleich oder verschieden, deren linearer oder verzweigter Alkylenrest 2 bis 12, vorzugsweise 2 bis 6 Kohlenstoffatome, ganz besonders 2 oder 3 Kohlenstoffatome enthält

- und wenigstens eine sulfonierte Polyamidgruppierung (PAS)

wobei das Copolymer (C) **dadurch gekennzeichnet ist, dass**

- die sulfonierte Polyamidgruppierung (PAS) aufweist

(i) nicht sulfonierte polyfunktionelle Einheiten (mNS), gleich oder verschieden, der Formel (mNS$^1$) und/oder (mNS$^2$)

$$-C(O)-A-C(O)-N(R)-D-N(R)- \quad (mNS^1) \text{ (dicarbonyl/diimino)}$$

$$\text{und/oder } -C-(O)-K-N(R)- \quad (mNS^2) \text{ ("Lactam")}$$

27

und/oder -C(O)-K-N(R)-C(O)-A-C(O)-     (mNS$^3$) ("Lactam"/dicarbonyl)

und/oder -N(R)-D-N(R)-C(O)-K-N(R)-     (mNS$^4$) (diiminio/"Lactam")

wobei in den Formeln

- A eine aliphatische, cycloaliphatische oder aromatische Kohlenwasserstoffgruppe darstellt

- D eine aliphatische, cycloaliphatische oder aromatische Kohlenwasserstoffgruppe darstellt, gegebenenfalls unterbrochen von einem oder mehreren Heteroatomen von Sauerstoff oder tertiärem Stickstoff

- K eine aliphatische, cycloaliphatische oder aromatische Gruppe darstellt

- die Symbole R identisch oder verschieden sind und ein Wasserstoffatom oder eine Alkylgruppe mit $C_1$-$C_4$ darstellen.

(ii) sulfonierte polyfunktionelle Einheiten (mS), gleich oder verschieden, der Formel

$$-V-Q(L-SO_3M)_n-W- ,$$

in der

- die Symbole V und W, identisch oder verschieden, darstellen eine

  - Carbonylgruppe -C(O)-

  - Oxygruppe -O-

  - Iminogruppe -NH-

  - oder (R)Iminogruppe-N(R)- , in der R eine Alkylgruppe mit $C_1$-$C_4$ darstellt

- das Symbol Q eine aromatische, aliphatische oder cycloaliphatische Kohlenwasserstoffgruppe darstellt

- L eine Valenzbindung oder eine Alkylen-, Alkoxyalkylen-, Oxyalkylen-, Arylen-, Alkylarylen-, Alkoxyarylengruppe ist

- M ein Wasserstoffatom oder ein alkalines Kation darstellt

- n größer oder gleich 1 ist

(iii) und Bindegruppen (gIPAS) von Einheiten der sulfonierten Polyamidgruppierung (PAS) -C(O)-O- und/oder -O-C(O)- und/oder -C(O)-N(R)- und/oder - N(R)-C(O)-, wobei R, gleich oder verschieden, ein Wasserstoffatom oder eine Alkylgruppe mit $C_1$-$C_4$ darstellt

  ❖ der Anteil der Funktionen $SO_3M$, ausgedrückt in Masse der Funktion $SO_3^-$, in der oder den Gruppierungen (PAS) derart ist, dass er wenigstens 0,1 %, vorzugsweise wenigstens 0,2%, ganz besonders wenigstens 0,4%, insbesondere 0,4 bis 15%, der Gesamtmasse des Copolymers (C) darstellt

  ❖ das Verhältnis Masse der Gesamtheit der Gruppierungen (POA) / Masse der Gesamtheit der Gruppierungen (PAS) 95/5 bis 30/70, vorzugsweise 90/10 bis 40/60, ganz besonders 85/15 bis 50/50 ist

  ❖ die Anzahl der Aminofunktionen -$NH_2$, welche in dem Copolymer (C) vorhanden ist, höchstens 80 Milliäquivalente pro Kilogramm des Polymers (C) ist

❖ die Anzahl der Carboxyfunktionen -COOH, welche in dem Copolymer (C) vorhanden ist, wenigstens 80 Milliäquivalente, vorzugsweise wenigstens 100 Milliäquivalente pro Kilogramm des Copolymers (C) ist.

**2.** Copolymer (C) gemäß Anspruch 1), **dadurch gekennzeichnet, dass** es eine Molmasse kleiner oder gleich 100.000, vorzugsweise kleiner oder gleich 70.000, ganz besonders 5.000 bis 60.000, darstellt.

**3.** Copolymer (C) gemäß Anspruch 1) oder 2), **dadurch gekennzeichnet, dass** es linear sequenziert ist.

**4.** Copolymer (C) gemäß Anspruch 3), **dadurch gekennzeichnet, dass** das Verhältnis Anzahl der Einheiten (POA) / Anzahl der Einheiten (PAS) 1/2 bis 2/1 ist.

**5.** Copolymer (C) gemäß irgendeinem der Ansprüche 1) bis 4), **dadurch gekennzeichnet, dass** es des weiteren in seiner oder seinen Polyamidgruppierungen (PAS) andere polyfunktionelle Einheiten aufweist, insbesondere:

❖ nicht sulfonierte Dicarbonyleinheiten der Formel -C(O)-A-C(O)-, in der A eine aliphatische, cycloaliphatische oder aromatische Kohlenwasserstoffgruppe darstellt, gleich oder nicht an der Dicarbonyl-Untereinheit der Einheit $(mNS^1)$ oder $(mNS^3)$, nicht verbunden mit einer Untereinheit Diimino-N(R)-D-N(R)- oder einer Untereinheit "Lactam" -C(O)-K-N(R)-

❖ und/oder nicht sulfonierte polyfunktionelle Einheiten der Formel (i)

$$\text{(i) -X-E-Y- ,}$$

in der

- die Symbole X und Y, identisch oder verschieden, eine Gruppe darstellen

  - Oxy -O-

  - Imino -NH-

  - oder (R)imino -N(R)- , in der R eine Alkylgruppe mit $C_1$-$C_4$ darstellt

- das Symbol E eine aliphatische, cycloaliphatische oder aromatische Kohlenwasserstoffgruppe darstellt, polyvalent, gegebenenfalls unterbrochen von einem oder mehreren Heteroatomen von Sauerstoff oder tertiärem Stickstoff, wobei die polyvalente Gruppe mit wenigstens einer Gruppe X und wenigstens einer Gruppe Y verbunden ist, oder

$$\text{(ii) -C(O)-E'-C(O)- ,}$$

in der
- das Symbol E' eine aliphatische, cycloaliphatische oder aromatische Kohlenwasserstoffgruppe darstellt, substituiert durch wenigstens eine Hydroxy- oder Carboxyfunktion.

**6.** Copolymer (C) gemäß irgendeinem der Ansprüche 1) bis 5), **dadurch gekennzeichnet, dass** die Gruppierung (PAS) Einheiten aufweist, die den aliphatischen Polyamiden PA 4, PA 6, PA 10, PA 11, PA 12, PA 6.6, PA 4.6, PA 10.6 entsprechen und des weiteren sulfonierte Einheiten beinhalten, vorzugsweise sulfonierte Dicarbonyle, Sulfosuccinoyl oder Sulfoisophtaloyl ganz besonders, wobei alle oder ein Teil der nicht sulfonierten aliphatischen Dicarbonyleinheiten durch aromatische Dicarbonyleinheiten ersetzt werden können.

**7.** Copolymer (C) gemäß irgendeinem der Ansprüche 1) bis 6), **dadurch gekennzeichnet, dass** jede Polyoxyalkylengruppierung (POA) verbunden ist mit einer sulfonierten Polyamidgruppierung (PAS) durch gleiche oder verschiedene Bindegruppen, welche wenigstens ein Heteroatom N, O, S aufweisen, vorzugsweise durch Amid-, Ester-, Karbamat-, Oxy-, Ureylen- oder Thio-Gruppen.

8. Verfahren zur Herstellung des Copolymers (C), welches Gegenstand irgendeiner der Ansprüche 1) bis 7) ist, durch Polykondensation von Monomeren (M), von welchen die Gruppierung (PAS) abstammt, in Gegenwart eines Prepolymers (PP), welches die Polyoxyalkylengruppierung (POA) enthält und Einheiten oder Funktionen trägt, die geeignet sind, zu kondensieren oder mit wenigstens einem der Monomere zu reagieren, und gegebenenfalls Folgereaktion mit einem Verbrauchsmittel für Aminofunktionen -NH$_2$.

9. Verfahren gemäß Anspruch 8), **dadurch gekennzeichnet, dass** die Monomere (M) aus jenen gewählt sind, von denen die aliphatischen Polyamide der Art PA 4, PA 6, PA 10, PA 11, PA 12, PA 6.6, PA 4.6, PA 10.6 abstammen, und des weiteren sulfonierte Monomere aufweisen, vorzugsweise sulfonierte Dicarbonsäuren, ganz besonders Sulfobemsteinsäuren oder Sulfoisophtalsäuren, wobei alle oder ein Teil der nicht sulfonierten aliphatischen Dicarbonsäuren durch aromatische Dicarbonsäuren ersetzt werden können.

10. Verfahren gemäß Anspruch 8) oder 9), **dadurch gekennzeichnet, dass** das Prepolymer (PP), welches eine Polyoxyalkylenkette (POA) aufweist und Motive trägt, die geeignet sind, zu kondensieren oder mit wenigstens einem der Monomere, von denen das sulfonierte Polyamid abstammt, zu reagieren, wenigstens ein Alkohol-, Amin-, Säure-, Epoxy-, oder Uritanende aufweist.

11. Verfahren gemäß irgendeinem der Ansprüche 8) bis 10), **dadurch gekennzeichnet, dass** der Vorgang der Polykondensation von Monomeren (M), von denen die Gruppierung (PAS) abstammt, in Anwesenheit des Prepolymers (PP), welches die Polyoxyalkylengruppierung (POA) aufweist, durchgeführt werden kann:

   - durch Inkontaktbringen des Prepolymers (PP) und unterschiedlicher Monomere (M) in Pulverform, in flüssiger Form oder als wässrige Lösung,

      ❖ wobei die relativen Mengen der unterschiedlichen Monomere (M) derart sind, dass das Molverhältnis Anzahl ihrer Carboxylfunktionen / Anzahl ihrer Aminfunktionen wenigstens 1 ist, vorzugsweise wenigstens 1,05, ganz besonders wenigstens 1,1

      ❖ die Menge des sulfonierten Monomers, ausgedrückt in Masse von SO$_3$, derart ist, dass sie wenigstens 0,1% , vorzugsweise wenigstens 0,2%, ganz besonders wenigstens 0,4%, insbesondere 0,4 bis 15% der Gesamtmasse der verwendeten Monomere (M) und des Prepolymers (PP) entspricht

      ❖ wobei die relativen Mengen des Prepolymers (PP) und der Monomere (M) derart sind, dass das Verhältnis Masse des Prepolymers (PP) / Masse der Gesamtheit von Monomeren (M) 95/5 bis 30/70, vorzugsweise 90/10 bis 40/60, ganz besonders 85/15 bis 50/50 ist

   - dann Polykondensation, genauer unter inerter Atmosphäre, bei einer Temperatur im Bereich von 190 bis 280°C, vorzugsweise im Bereich von 220 bis 270°C, mit Destillation des gebildeten Wassers

   - und gegebenenfalls Folgekondensation oder Folgereaktion des gebildeten Copolymers mit einer Verbraucherverbindung der Aminofunktionen -NH$_2$, in einer solchen Menge, dass die Menge der gegebenenfalls in dem Endcopolymer vorhandenen Funktionen -NH$_2$ nicht mehr als 80 Milliäquivalente pro Kilogramm des Endcopolymers darstellt.

12. Verfahren gemäß Anspruch 11), **dadurch gekennzeichnet, dass** die Verbindung, welche geeignet ist, die Aminofunktionen -NH$_2$ zu verbrauchen,

   - eine Carbonsäure ist, vorzugsweise Bernsteinsäure, Isophthalsäurenatriumsulphonat

   - ein Carboxylanhydrid ist, vorzugsweise Bernsteinanhydrid, Phtalanhydrid, Maleinanhydrid

   - ein mono- oder polyfunktionelles Epoxyd ist, vorzugsweise ein Epoxyalkan mit 4 bis 18 Kohlenstoffatomen

   - ein Monoisocyanat, vorzugsweise Dodecanisocyanat, ist

   - ein vierwertiges Acrylat oder Methacrylat ist.

**13.** Verfahren gemäß Anspruch 12), **dadurch gekennzeichnet, dass** die Verbindung, die geeignet ist, die Aminofunktionen -NH$_2$ zu verbrauchen, in einer solchen Menge verwendet wird, dass die Menge der gegebenenfalls in dem Endcopolymer vorhandenen Funktionen -NH$_2$ nicht mehr als 80 Milliäquivalente pro Kilogramm Endcopolymer darstellt.

**14.** Verwendung des wasserlöslichen oder wasserdispergierbaren Copolymers (C), welches Gegenstand irgendeines der Ansprüche 1) bis 7) ist, oder geeignet ist, gemäß irgendeinem der Ansprüche 8) bis 13) erhalten zu werden, als Reinigungsmittel für feste oder textile Flächen, insbesondere aus synthetischem Polymer, ganz besonders textile Flächen aus Polyamid, und/oder als Mittel, welches geeignet ist, den Flächen Eigenschaften der Fleckenbeständigkeit zu verleihen und/oder das Entfernen von Flecken und von Verschmutzungen der Flächen zu erleichtern.

**15.** Verfahren zum Reinigen von festen oder textilen Flächen, insbesondere aus synthetischem Polymer, ganz besonders textilen Flächen aus Polyamid, und/oder um den Flächen Eigenschaften der Fleckenbeständigkeit zu verleihen und/oder um das Entfernen von Flecken und Verschmutzungen auf den Flächen zu erleichtern, durch nicht permanente Behandlung der Flächen mittels des wasserlöslichen oder wasserdispergierbaren Copolymers (C), welches Gegenstand irgendeines der Ansprüche 1) bis 7) ist, oder geeignet ist, gemäß irgendeinem der Ansprüche 8) bis 13) erhalten zu werden, wobei das Copolymer (C) in wässriger Lösung oder Dispersion vorhanden ist.

**16.** Verwendung oder Verfahren gemäß Anspruch 14) oder 15), **dadurch gekennzeichnet, dass** die in Frage kommende Fläche eine Duschwand ist.

**17.** Verwendung oder Verfahren gemäß Anspruch 14) oder 15), **dadurch gekennzeichnet, dass** die in Frage kommende Fläche Wäsche, Kleidung oder Unterkleidung ist, vorzugsweise aus Polyamid.

**18.** Verwendung oder Verfahren gemäß Anspruch 14) oder 15), **dadurch gekennzeichnet, dass** die in Frage kommende Fläche ein Teppich oder ein Teppichboden ist, vorzugsweise aus Polyamid.

**19.** Verwendung oder Verfahren gemäß Anspruch 16) oder 18), **dadurch gekennzeichnet, dass** das Copolymer (C) mit 0,01 bis 5, vorzugsweise 0,05 bis 3 g/m$^2$ der Fläche verwendet wird.

**20.** Reinigungszusammensetzungen für das Reinigen von festen oder textilen Flächen, insbesondere aus synthetischem Polymer, ganz besonders textilen Flächen aus Polyamid, und/oder um diesen Flächen Eigenschaften der Fleckenbeständigkeit zu verleihen und/oder um das Entfernen von Flecken und Verschmutzungen auf den Flächen zu erleichtem, **dadurch gekennzeichnet, dass** sie wenigstens ein wasserlösliches oder wasserdispergierbares Copolymer (C) aufweisen, welches Gegenstand irgendeines der Ansprüche 1) bis 7) ist, oder geeignet ist, durch irgendeinen der Ansprüche 8) bis 13) erhalten zu werden.

**21.** Reinigungszusammensetzungen gemäß Anspruch 20), **dadurch gekennzeichnet, dass** sie 0,05 bis 10, vorzugsweise 0,1 bis 2 Gew.-% des Copolymers (C) aufweisen.

**22.** Reinigungszusammensetzungen gemäß Anspruch 20) oder 21), **dadurch gekennzeichnet, dass** sie für das Spülen von Duschwänden bestimmt sind und Wasser, einen Chelatbilder und wenigstens ein Tensid aufweisen.

**23.** Verfahren zum Reinigen von Duschwänden durch Befeuchten der Wandflächen mit Wasser und Bestäuben der feuchten Wände mit der Zusammensetzung, die Gegenstand des Anspruchs 22) ist.

**24.** Verfahren gemäß Anspruch 23), **dadurch gekennzeichnet, dass** die Wand aus Porzellan, Keramikfliesen, Plexiglas oder aus Glasfasern besteht.

**25.** Reinigungszusammensetzungen gemäß Anspruch 20) oder 21), **dadurch gekennzeichnet, dass** diese zum Waschen und/oder Spülen und/oder Weichspülen von Wäsche, Kleidung oder Unterkleidung, vorzugsweise aus Polyamid, bestimmt ist.

**26.** Reinigungszusammensetzungen gemäß Anspruch 20) oder 21), **dadurch gekennzeichnet, dass** diese für das Reinigen von Teppichen oder Teppichböden, vorzugsweise aus Polyamid, bestimmt sind.

**Claims**

1. Water-soluble or water-dispersible copolymer (C) comprising

   - at least one polyoxyalkylene unit (POA) comprising 2 to 200, preferably 5 to 150, similar or different oxyalkylene units, wherein the linear or branched alkylene residue contains 2 to 12, preferably 2 to 6, carbon atoms, most particularly 2 or 3 carbon atoms; and
   - at least one sulphonated polyamide unit (PAS);

   said copolymer (C) being **characterized in that**:

   - said sulphonated polyamide (PAS) unit comprises:

     (i) <u>non-sulphonated polyfunctional units (mNS)</u> which may be similar or different, with formula (mNS[1]) and/or (mNS[2])

     $$-C(O)-A-C(O)-N(R)-D-N(R)- \qquad (mNS^{1})$$

     (dicarbonyl/diimino) and/or

     $$-C(O)-K-N(R)- \qquad (mNS^{2})$$

     ("lactam") and/or

     $$-C(O)-K-N(R)-C(O)-A-C(O)- \qquad (mNS^{3})$$

     ("lactam"/dicarbonyl) and/or

     $$-N(R)-D-N(R)-C(O)-K-N(R)- \qquad (mNS^{4})$$

     (diimino/"lactam")
     in which formulae

     - A represents an aliphatic, cycloaliphatic or aromatic hydrocarbon group;
     - D represents an aliphatic, cycloaliphatic or aromatic hydrocarbon group which may be interrupted by one or more oxygen or tertiary nitrogen heteroatoms;
     - K represents an aliphatic, cycloaliphatic or aromatic group;
     - the symbols R are identical or different and represent a hydrogen atom or a $C_1$-$C_4$ alkyl group;

     (ii) <u>sulphonated polyfunctional units (mS)</u> which are similar or different with formula:

     $$-V-Q(L-SO_3M)_n-W-$$

     where:

     - the symbols V and W, which are identical or different, represent:

       - a carbonyl -C(O)- group;
       - an oxy -O- group;
       - an imino -NH- group; or
       - an (R) imino -N(R)- group where R represents a $C_1$-$C_4$ alkyl group;

     - the symbol Q represents an aromatic, aliphatic or cycloaliphatic hydrocarbon group;

■ L is a valence bond or an alkylene, alkoxyalkylene, oxyalkylene, arylene, alkylarylene or alkoxyarylene group;

■ M represents a hydrogen atom or an alkaline cation;

■ n is 1 or more;

(iii) <u>and binding groups (glPAS) of the units of said sulphonated polyamide unit (PAS)</u> -C(O)-O- and/or -O-C(O)- and/or -C(O)-N(R)- and/or -N(R)-C(O)-, where R, which may be similar or different, represents a hydrogen atom or a $C_1$-$C_4$ alkyl group;

♦ the quantity of $SO_3M$ functions, expressed as the mass of $SO_3^-$ function, in said (PAS) unit or units is such that it represents at least 0.1%, preferably at least 0.2%, most particularly at least 0.4%, in particular 0.4% to 15%, of the total copolymer (C) mass;

♦ the mass ratio of the total (POA) units/total (PAS) units is 95/5 to 30/70, preferably 90/10 to 40/60, more particularly 85/15 to 50/50;

♦ the number of amine functions -$NH_2$ present in said copolymer (C) is at most 80 milliequivalents per kilogram of copolymer (C);

♦ the number of carboxyl functions -COOH present in said copolymer (C) is at least 80 milliequivalents, preferably at least 100 milliequivalents per kilogram of copolymer (C).

2. Copolymer (C) according to Claim 1, **characterized in that** it has a number average molecular mass of 100,000 or less, preferably 70,000 or less, most particularly 5000 to 60,000.

3. Copolymer (C) according to Claim 1 or Claim 2, **characterized in that** it is a linear block copolymer.

4. Copolymer (C) according to Claim 3, **characterized in that** the number of (POA) units/number of (PAS) units ratio is 1/2 to 2/1.

5. Copolymer (C) according to any one of Claims 1 to 4, **characterized in that** it also comprises, in its polyamide (PAS) unit(s), other polyfunctional units such as:

♦ <u>non-sulphonated dicarbonyl units with formula -C(O)-A-C(O)-,</u> where A represents an aliphatic, cycloaliphatic or aromatic hydrocarbon group, similar or not similar to the dicarbonyl sub-unit of the (mNS[1]) or (mNS[3]) unit, not bonded to a diimino sub-unit -N(R)-D-N(R)- or to a "lactam" sub-unit -C(O)-K-N(R)-;

♦ and/or <u>non-sulphonated polyfunctional units with formula:</u>

(i) -X-E-Y-

where

■ the symbols X and Y, which may be identical or different, represent:

■ an oxy -O- group;

■ an imino -NH- group; or

■ an (R)imino -N(R)- group where R represents a $C_1$-$C_4$ alkyl group;

■ the symbol E represents a polyvalent aliphatic, cycloaliphatic or aromatic hydrocarbon group which may be interrupted by one or more oxygen or tertiary nitrogen heteroatom(s), said polyvalent group being bonded to at least one group X and to at least one group Y; or (ii) -C(O)-E'-C(O)- where

■ the symbol E' represents an aliphatic, cycloaliphatic or aromatic hydrocarbon group substituted with at least one hydroxyl or carboxyl

6. Copolymer (C) according to any one of Claims 1 to 5, **characterized in that** the (PAS) unit comprises units corresponding to aliphatic polyamides such as PA 4, PA 6, PA 10, PA 11, PA 12, PA 6.6, PA 4.6, PA 10.6 and also containing sulphonated units, preferably sulphonated dicarbonyls, in particular sulphosuccinyl or sulphoisophthalyl, all or a portion of the non-sulphonated aliphatic dicarbonyl units being capable of being replaced by aromatic dicarbonyl units.

7. Copolymer (C) according to any one of Claims 1 to 6, **characterized in that** each polyoxyalkylene (POA) unit is bonded to a sulphonated polyamide (PAS) unit via similar or different binding groups comprising at least one N, O or S heteroatom, preferably via amide, ester, carbamate, oxy, ureylene or thio groups.

8. Process for preparing the copolymer (C) as defined in any one of Claims 1 to 7, by polycondensation of monomers (M) from which the (PAS) unit is derived in the presence of a prepolymer (PP) containing the polyoxyalkylene unit (POA) and carrying units or functions which can condense together or react with at least one of said monomers, and optional post-reaction with an agent which consumes amine functions -$NH_2$.

9. Process according to Claim 8, **characterized in that** monomers (M) are selected from those from which aliphatic polyamides of the PA 4, PA 6, PA 10, PA 11, PA 12, PA 6.6, PA 4.6, PA 10.6 type are derived and further comprising sulphonated monomers, preferably sulphonated dicarboxylic acids, in particular sulphosuccinic or sulphoisophthalic acids, all or part of the non-sulphonated aliphatic dicarboxylic acids possibly being replaced by aromatic dicarboxylic acids.

10. Process according to Claim 8 or 9, **characterized in that** prepolymer (PP) with a polyoxyalkylene chain (POA) carrying units which are capable of condensing or reacting with at least one of said monomers from which the sulphonated polyamide is derived has at least one alcohol, amine, acid, epoxy or urethane end group.

11. Process according to any one of Claims 8 to 10, **characterized in that** the operation for polycondensation of monomers (M), from which the (PAS) unit is derived, in the presence of said prepolymer (PP) containing the polyoxyalkylene (POA) unit can be carried out:

    - by bringing the prepolymer (PP) and the different monomers (M) into contact in the form of a powder, in the liquid form or in an aqueous solution;

        - the relative quantities of the different monomers (M) being such that the molar ratio of the number of their carboxylic functions/number of their amine functions is at least 1, preferably at least 1.05, most particularly at least 1.1;
        - the quantity of sulphonated monomer, expressed as the mass of $SO_3$, is such that it represents at least 0.1%, preferably at least 0.2%, most particularly at least 0.4%, in particular 0.4% to 15% of the total mass of monomers (M) and prepolymer (PP) used;
        - the relative quantities of prepolymer (PP) and monomers (M) being such that the weight ratio of the prepolymer (PP)/total monomer (M) weight is 95/5 to 30/70, preferably 90/10 to 40/60, most particularly 85/15 to 50/50;

    - then polycondensation proper in an inert atmosphere, at a temperature of the order of 190°C to 280°C, preferably of the order of 220°C to 270°C, with distillation of the water formed;
    - and optional post-condensation or post-reaction of the copolymer formed with a compound which consumes amine functions -$NH_2$ in a quantity such that the quantity of -$NH_2$ functions possibly present in the final copolymer does not represent more than 80 milliequivalents per kilogram of the final copolymer.

12. Process according to Claim 11, **characterized in that** said compound which can consume amine functions -$NH_2$ is a:

    - carboxylic acid, preferably succinic acid or isophthalic acid sodium sulphonate;
    - carboxylic anhydride, preferably succinic anhydride, phthalic anhydride or maleic anhydride;
    - mono- or polyfunctional epoxide, preferably an epoxyalkane containing 4 to 18 carbon atoms;
    - monoisocyanate, preferably dodecane isocyanate;
    - quaternary acrylate or methacrylate.

13. Process according to Claim 12, **characterized in that** said compound which can consume amine functions -$NH_2$ is employed in a quantity such that the quantity of -$NH_2$ functions which are possibly present in the final copolymer does not represent more than 80 milliequivalents per kilogram of the final copolymer.

14. Use of a water-soluble or water-dispersible copolymer (C) as defined in any one of Claims 1 to 7 or which can be obtained according to any one of Claims 8 to 13, as a detergent agent for hard or textile surfaces, in particular made of synthetic polymer, most particularly polyamide textile surfaces, and/or as an agent which can endow said surfaces with stain resistance properties and/or which can facilitate soil release from said surfaces.

15. Method for cleaning hard or textile surfaces, in particular made of synthetic polymer, most particularly polyamide textile surfaces, and/or for endowing said surfaces with stain resistance properties and/or for facilitating soil release from said surfaces, by non permanent treatment of said surfaces using a water-soluble or water-dispersible copolymer (C) as defined in any one of Claims 1 to 7, or which can be obtained according to any one of Claims 8 to 13, said copolymer (C) being present in solution or in an aqueous dispersion.

16. Use or method according to Claim 14 or 15, **characterized in that** the surface under consideration is a shower wall.

17. Use or method according to Claim 14 or 15, **characterized in that** the surface under consideration is linen, clothes or underwear, preferably made of polyamide.

18. Use or method according to Claim 14 or 15, **characterized in that** the surface under consideration is a carpet or a moquette, preferably made of polyamide.

19. Use or method according to Claim 16 or 18, **characterized in that** said copolymer (C) is used in an amount of 0.01 to 5, preferably 0.05 to 3 $g/m^2$ of surface.

20. Detergent compositions for cleaning hard or textile surfaces, in particular made of synthetic polymer, most particularly polyamide textile surfaces, and/or for endowing said surfaces with stain resistance properties and/or for facilitating soil release from said surfaces, **characterized in that** they comprise at least one water-soluble or water-dispersible copolymer (C) as defined in any one of Claims 1 to 7, or which can be obtained according to any one of Claims 8 to 13.

21. Detergent compositions according to Claim 20, **characterized in that** they comprise 0.05 to 10%, preferably 0.1 to 2% by weight of copolymer (C).

22. Detergent compositions according to Claim 20 or 21, **characterized in that** they are intended for rinsing shower walls and comprise water, a chelating agent and at least one surfactant.

23. Method of cleaning shower walls by wetting the surface of the walls with water and spraying said wet walls with the composition which is the subject of Claim 22.

24. Method according to Claim 23, **characterized in that** said wall surface is made of porcelain, ceramic tiles, Plexiglas or glass fibres.

25. Detergent compositions according to Claim 20 or 21, **characterized in that** they are intended for washing and/or rinsing and/or softening linen, clothes or underwear, preferably made of polyamide.

26. Detergent compositions according to Claim 20 or 21, **characterized in that** they are intended for cleaning carpets and moquettes, preferably made of polyamide.